# EUROPEAN PATENT APPLICATION

(11) **EP 4 823 053 A1**
(43) Date of publication of application: **14.10.2026**
(21) Application number: 24911206.1
(22) Date of filing: 25.12.2024
(51) Int. Cl.: H04L 41/16

(54) **COMMUNICATION METHOD AND RELATED DEVICE**

(30) Priority: 29.12.2023 CN 202311863966
(71) Applicant: Huawei Technologies Co., Ltd., Shenzhen, Guangdong 518129 (CN)
(72) Inventor: YANG, Lu, Shenzhen, Guangdong 518129 (CN); PENG, Jingchen, Shenzhen, Guangdong 518129 (CN); PENG, Chenghui, Shenzhen, Guangdong 518129 (CN); LIU, Zhe, Shenzhen, Guangdong 518129 (CN); WU, Shitong, Shenzhen, Guangdong 518129 (CN)
(74) Representative: Pfenning, Meinig & Partner mbB
(86) International application number: PCT/CN2024/142214
(87) International publication number: WO 2025/140282

(57) **Abstract**

A communication method and a related device are provided, to implement at least one of determining, updating, and deploying of an AI model in a communication network through interaction between different communication apparatuses. In the method, a second communication apparatus serves as a receiver of first information. The second communication apparatus may determine a first AI model group based on the first information from a first communication apparatus, and send, to the first communication apparatus, second information indicating a first AI model in the first AI model group. Therefore, when a communication apparatus in a communication system serves as an AI participating node, computational power of the communication apparatus can be used for AI model processing, while the first information from the first communication apparatus can also be used as one of determining bases for the second communication apparatus to determine an AI model. In this way, the AI model determined by the second communication apparatus can adapt to the first communication apparatus as much as possible, thereby improving processing performance of subsequent model processing performed by the first communication apparatus based on the AI model.

## Description

This application claims priority to Chinese Patent Application No. 202311863966.3, filed with the China National Intellectual Property Administration on December 29, 2023 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Wireless communication may be transmission communication performed between two or more communication nodes without propagation by using a conductor or a cable. The communication node usually includes a network device and a terminal device.

Currently, in a wireless communication system, a communication node usually has a signal receiving and sending capability and a computing capability. A network device having a computing capability is used as an example. The computing capability of the network device is mainly to provide computational power support for a signal receiving and sending capability (for example, performing sending processing and receiving processing on a signal), to implement communication between the network device and another communication node.

However, in a communication network, in addition to providing computational power support for the foregoing communication task by using the computing capability of the communication node, the communication node may further have a surplus computing capability. Therefore, how to use these computing capabilities is an urgent technical problem to be resolved.

### SUMMARY

This application provides a communication method and a related device, to determine and deploy an artificial intelligence (artificial intelligence, AI) model in a communication network through interaction between different communication apparatuses, so that computational power of the communication apparatus can be applied to AI model processing.

A first aspect of this application provides a communication method. The method is performed by a first communication apparatus. The first communication apparatus may be a communication device (for example, a terminal device), or the first communication apparatus may be some components (for example, a processor, a chip, or a chip system) in the communication device, or the first communication apparatus may be a logic module or software that can implement all or some functions of the communication device. In the method, the first communication apparatus sends first information. The first information is used to determine a first AI model group, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are configured to be deployed on M communication apparatuses, the M communication apparatuses include the first communication apparatus, and M is less than or equal to K. The first communication apparatus receives second information. The second information is used to determine a first AI model, and the first AI model includes one or more of the K AI models.

Based on the foregoing technical solution, the second communication apparatus serves as a receiver of the first information. The second communication apparatus may determine the first AI model group based on the first information from the first communication apparatus, and send, to the first communication apparatus, the second information used to determine a first AI model in the first AI model group. Therefore, when a communication apparatus in a communication system serves as an AI participating node, computational power of the communication apparatus can be used for AI model processing, while the first information from the first communication apparatus can also be used as one of determining bases for the second communication apparatus to determine an AI model. In this way, the AI model determined by the second communication apparatus can adapt to the first communication apparatus as much as possible, thereby improving processing performance of subsequent model processing performed by the first communication apparatus based on the AI model.

In this application, terms such as an AI model, a neural network model, an AI neural network model, a machine learning model, and an AI processing model may be replaced with each other.

It should be understood that, that the first AI model group includes the K AI models and the second AI model may be understood as that a function of the first AI model group is implemented by using at least model processing of the K AI models and model processing of the second AI model. In other words, after the first communication apparatus receives the second information, the first communication apparatus may determine the first AI model by using the second information, and perform model processing on the first AI model. Correspondingly, the second communication apparatus may perform model processing on the second AI model deployed on the second communication apparatus. Optionally, the model processing may include one or more of model update processing, model training processing, and model inference processing.

Optionally, the M communication apparatuses configured to deploy the K AI models may be referred to as a collaboration set of the second communication apparatus, a collaboration set of the first AI model group, or a collaboration set of the second AI model.

Optionally, when the first AI model group is considered as an AI model, the K AI models and the second AI model may be understood as different AI submodels in the AI model.

It should be understood that the second communication apparatus may have a plurality of implementations.

For example, any one of the M communication apparatuses is a terminal device, and the second communication apparatus may be a terminal device. Correspondingly, the first communication apparatus and the second communication apparatus may communicate over a sidelink (sidelink, SL). In this case, the K AI models and the second AI model may be referred to as an end-to-end model, an end-to-end collaborative model, or the like. For example, the end-to-end collaborative model is used as an example. When K is equal to 1, the end-to-end collaborative model may be referred to as a single-link end-to-end collaborative model. When K is greater than 1, the end-to-end collaborative model may be referred to as a multi-link end-to-end collaborative model.

For another example, any one of the M communication apparatuses is a terminal device, and the second communication apparatus may be a network device (for example, an access network device). Correspondingly, the first communication apparatus and the second communication apparatus may communicate over uplink and downlink communication links. In this case, the K AI models and the second AI model may be referred to as edge-to-end models, edge-to-end collaborative models, end-to-edge models, end-to-edge collaborative models, or the like. For example, the end-to-edge collaborative model is used as an example. When K is equal to 1, the end-to-edge collaborative model may be referred to as a single-link end-to-edge collaborative model. When K is greater than 1, the end-to-edge collaborative model may be referred to as a multi-link end-to-edge collaborative model.

It should be understood that one AI model is deployed on one communication apparatus (for example, the first AI model is deployed on the first communication apparatus, and the second AI model is deployed on the second communication apparatus), which may be expressed as that one AI model is configured to be deployed on one communication apparatus. In other words, after obtaining a model parameter of one AI model, one communication apparatus may obtain/generate/construct the AI model based on the model parameter of the AI model. Subsequently, the communication apparatus may perform model processing on the AI model.

It should be understood that the K AI models are configured to be deployed on the M communication apparatuses, and M is less than or equal to K.

For example, when M is equal to K, different AI models in the K AI models may be deployed on different communication apparatuses in the M communication apparatuses. In other words, the K AI models may be in a one-to-one correspondence with the M communication apparatuses. In other words, an i^{th} AI model in the K AI models may be deployed on an i^{th} communication apparatus in the M communication apparatuses (a value of i is 1 to K or 1 to M). For example, the first AI model configured to be deployed on the first communication apparatus may include one of the K AI models.

For another example, when M is less than K, at least two AI models in the K AI models may be deployed on one of the M communication apparatuses. That is, the K AI models may not be in a one-to-one correspondence with the M communication apparatuses. For example, the first AI model configured to be deployed on the first communication apparatus may include at least two AI models in the K AI models.

Optionally, the model parameter may include one or more of a hyperparameter of the model, a dataset of the model (including input data of the model and label data corresponding to the input data), and a structure parameter of the model.

It should be understood that a wireless communication signal (for example, receiving and sending of configuration information of a communication resource, and receiving and sending of a reference signal) may be transmitted between different communication apparatuses (for example, the first communication apparatus and the second communication apparatus). Optionally, an AI model (for example, the first AI model or the second AI model) in this application may be used to perform management (including at least one of configuration, update, and optimization) on the wireless communication signal. For example, the AI model may include one or more of the following: an AI model used for modulation and/or demodulation, an AI model used for channel prediction, an AI model used for beam management, an AI model used for positioning assistance, an AI model used for channel compression, an AI model used for resource scheduling, or an AI model used to replace one or more modules in a transmitter and/or a receiver. Alternatively, the AI model in this application may be an AI model used for another AI task, for example, an AI model used for image recognition, an AI model used for natural language processing, or an AI model used for computer vision.

In a possible implementation, before the first communication apparatus receives the second information, the method further includes: The first communication apparatus receives third information. The third information is used to configure a mapping relationship between P pieces of dimension information and Q indexes, both P and Q are positive integers, the second information includes one or more indexes of the Q indexes, and the one or more indexes are used to determine one piece of dimension information in the P pieces of dimension information.

In this application, the index may be replaced with another term, for example, an identifier or a number.

Optionally, the mapping relationship configured by using the third information may be implemented by using a table, a formula, or the like.

Based on the foregoing technical solution, the first communication apparatus may receive the third information used to configure the mapping relationship between the P pieces of dimension information and the Q indexes. Then, the second information received by the first communication apparatus may include one or more indexes of the Q indexes. In addition, the first communication apparatus may determine one piece of dimension information in the P pieces of dimension information based on the one or more indexes. Therefore, in an implementation in which the mapping relationship is configured by using the third information, the second information sent by the second communication apparatus may indicate the dimension information by carrying an index, so that indication overheads can be reduced.

Optionally, the third information is layer-3 (layer-3, L3) signaling, and the second information is layer-1 (layer-1, L1) and/or layer-2 (layer-2, L2) signaling. For example, the L3 signaling may include non-access stratum (non-access stratum, NAS) signaling and/or radio resource control (radio resource control, RRC) layer signaling. For another example, the L1 signaling may be understood as physical (physical) layer signaling. For another example, the L2 signaling may be understood as radio network layer signaling, including at least one of medium access control (medium access control, MAC) layer signaling, radio link control (radio link control, RLC) signaling, packet data convergence protocol (packet data convergence protocol, PDCP) signaling, and service data adaptation protocol (service data adaptation protocol, SDAP) layer signaling.

In a possible implementation, the second information includes at least one of the following: a model parameter of the first AI model, a model parameter of the first AI model group, dimension information of input data of the first AI model, and dimension information of output data of the first AI model.

It may be understood that when the second information includes the dimension information of the input data of the first AI model and/or the dimension information of the output data of the first AI model, the first communication apparatus may update an initial model based on the dimension information of the input data and/or the dimension information of the output data, to obtain the first AI model. Optionally, the initial model may be a model pre-configured on the first communication apparatus, or may be a model (for example, a third AI model described below) configured by the second communication apparatus. This is not limited herein.

Based on the foregoing technical solution, the second information used to determine the first AI model may include at least one of the foregoing. In other words, the second communication apparatus may deploy the first AI model on the first communication apparatus by using at least one of the foregoing, to improve flexibility of implementing the solution.

Optionally, the second information may be sent by using one message/signaling, or may be sent by using a plurality of messages/signaling. This is not limited herein.

In a possible implementation, the first information includes first dimension information or second dimension information. When the input of the first AI model includes the output of the second AI model, the first dimension information is used to determine the dimension information of the input data of the first AI model or dimension information of output data of the second AI model. When the input of the second AI model includes the output of the first AI model, the second dimension information is used to determine the dimension information of the output data of the first AI model or dimension information of input data of the second AI model.

Based on the foregoing technical solution, the second communication apparatus may determine, by using the first information, dimension information of data transmitted over the communication link. However, when a communication bandwidth between the first communication apparatus and the second communication apparatus is fixed, because a dimension of data transmitted over the communication link is associated with processing performance of the AI model, in this manner, an implementation process in which the second communication apparatus determines the first AI model group can be simplified, complexity of the second communication apparatus is reduced, and processing performance of AI models included in the first AI model group can be improved.

In a possible implementation, the dimension information includes at least one of the following: an upper limit of a dimension, a lower limit of a dimension, a dimension expected by the first communication apparatus, and a value range of the dimension expected by the first communication apparatus.

Optionally, the dimension information may include a value of the at least one of the foregoing, a quantized value of the value of the at least one item, an index of the value of the at least one of the foregoing, an index of the quantized value of the value of the at least one of the foregoing, or the like, or may be implemented in another manner. This is not limited herein.

Based on the foregoing technical solution, the dimension information determined by the first dimension information or the second dimension information may include at least one of the foregoing, to improve flexibility of implementing the solution.

For example, when the dimension information includes the upper limit of the dimension and/or the lower limit of the dimension, the second communication apparatus may use a range indicated by the upper limit and/or the lower limit as one of determining bases of the AI model, so that flexibility of implementing the solution can be improved.

For another example, when the dimension information includes the dimension expected by the first communication apparatus and/or the value range of the dimension expected by the first communication apparatus, the AI model determined by the second communication apparatus based on the dimension information can meet an expectation of the first communication apparatus.

In a possible implementation, the first dimension information or the second dimension information is determined based on channel state information.

Based on the foregoing technical solution, the first dimension information or the second dimension information included in the first information may be determined based on the channel state information, so that the first dimension information or the second dimension information can reflect a channel characteristic of a wireless channel between the first communication apparatus and the second communication apparatus to some extent, and an AI model that can be subsequently obtained based on the first information can adapt to the channel characteristic of the wireless channel, to improve transmission performance of AI data corresponding to the AI model. In addition, when the AI model obtained based on the first information can adapt to the channel characteristic of the wireless channel, transmission data of the radio link can also meet a channel bandwidth requirement as much as possible, thereby improving model performance of the AI models included in the first AI model group.

Optionally, the channel state information may include channel information between the first communication apparatus and the second communication apparatus, and/or channel information between the second communication apparatus and the first communication apparatus. When the first communication apparatus is a terminal device and the second communication apparatus is a network device, the channel information between the first communication apparatus and the second communication apparatus may be understood as uplink channel information, and the channel information between the second communication apparatus and the first communication apparatus may be understood as downlink channel information.

Optionally, the channel state information may be obtained based on a reference signal.

For example, when the first communication apparatus communicates with the second communication apparatus by using a sidelink, the reference signal may include a sidelink synchronization signal/physical broadcast channel block (sidelink synchronization signal/physical broadcast channel block, sidelink SSB, SL-SSB, or S-SS/PSBCH block), a sidelink channel state information reference signal (sidelink channel state information reference signal, SL-CSI-RS), and the like.

For another example, when the first communication apparatus communicates with the second communication apparatus through an uplink and a downlink, the reference signal may include a channel state information reference signal (channel state information reference signal, CSI-RS), a sounding reference signal (sounding reference signal, SRS), and the like.

In a possible implementation, the first information includes at least one of the following: the input data of the first AI model, label data of the input data of the first AI model, local computational power status information of the first communication apparatus, and the channel state information.

Based on the foregoing technical solution, the first information may include at least one piece of the foregoing information, so that the second communication apparatus can determine, based on the at least one piece of the foregoing information, the first AI model group adapted to the first communication apparatus.

In an implementation example, when the first information includes the input data of the first AI model and the label data of the input data of the first AI model, because the input data may be used as the input of the first AI model, the label data may be used as one of determining bases of the model processing performance of the first AI model. Therefore, for the second communication apparatus, the second communication apparatus may obtain an AI model with good performance based on the two pieces of information.

In addition, for the second communication apparatus, the second communication apparatus may implement mutual information-based mathematical calculation based on the two pieces of information and AI data (for example, the input data of the second AI model or the output data of the second AI model) that is received and sent by the second communication apparatus over the radio link, and determine the first AI model group based on a result of the mathematical calculation, to improve model performance of the AI models included in the first AI model group on the premise that radio link data meets a bandwidth.

In another implementation example, when the first information includes the local computational power status information of the first communication apparatus, a complexity requirement of model processing of the AI model may be related to a local computational power status of the first communication apparatus. Therefore, for the second communication apparatus, the first AI model group determined by the second communication apparatus based on the local computational power status information may be adapted to the local computational power status of the first communication apparatus, to provide a first AI model that meets the local computational power status, and improve a success rate of model processing performed by the first communication apparatus based on the first AI model.

In another implementation example, when the first information includes the channel state information, because the channel state information may reflect a channel characteristic of a wireless channel between the first communication apparatus and the second communication apparatus, for the second communication apparatus, the first AI model group determined by the second communication apparatus based on the channel state information is adapted to the channel characteristic, so that transmission data of a radio link meets a channel bandwidth requirement as much as possible, to improve transmission performance of AI data corresponding to the AI model.

It may be understood that, when the first information includes two or more pieces of the foregoing information, based on a technical gain brought by any one of the foregoing descriptions, a further cumulative gain may be obtained by using the two or more pieces of information.

Optionally, the first information may be sent by using one message/signaling, or may be sent by using a plurality of messages/signaling. This is not limited herein.

In a possible implementation, that the first information is used to determine the first AI model group includes: The first information is used to update a second AI model group to obtain the first AI model group. The second AI model group includes X AI models and a fourth AI model, and X is an integer greater than or equal to 1. An input of any one of the X AI models includes an output of the fourth AI model, or an input of the fourth AI model includes an output of any one of the X AI models. A third AI model in the X AI models is deployed on the first communication apparatus, the third AI model includes one or more of the X AI models, the fourth AI model is deployed on a second communication apparatus, the X AI models are deployed on Y communication apparatuses, the Y communication apparatuses include the first communication apparatus, and Y is less than or equal to X.

Optionally, update may be replaced with another term, such as modification, iteration, optimization, processing, or the like.

Optionally, when the second AI model group is considered as an AI model, the X AI models and the fourth AI model may be understood as a plurality of AI submodels in the AI model.

Based on the foregoing technical solution, for the second communication apparatus, after the second communication apparatus receives the first information, the second communication apparatus may update the second AI model group based on the first information to obtain the first AI model group. In other words, the first information sent by the first communication apparatus may be used to update another AI model, so that the solution can be applied to an AI model update scenario.

Optionally, the third AI model and the second AI model included in the second AI model group may be a general-purpose model or a dedicated model, to update different types of models.

It should be understood that the general-purpose model may be referred to as a basic model, a large model, or an L0 model. The dedicated model may be referred to as a small model, an L1 model, an L2 model, or the like.

The large model is used as an example. The large model may be a machine learning model having a large quantity of parameters and a complex structure, and can process massive data and complete various complex tasks, such as natural language processing, computer vision, and speech recognition.

Optionally, the large model is usually constructed by using a deep neural network, and has tens of billions or even hundreds of billions of parameters.

Optionally, a design objective of the large model may be to improve an expression capability and prediction performance of a model, to process more complex tasks and data.

Optionally, the large model may learn complex patterns and features by being trained on a massive amount of data, thereby achieving a stronger generalization capability and enabling accurate prediction on unprocessed data.

In contrast, the small model may be a model with a smaller quantity of parameters and a smaller quantity of layers. Usually, compared with the small model, the large model usually has a larger quantity of parameters and a larger quantity of layers, and has a stronger expression capability and higher accuracy. However, the large model also requires more compute resources and time for training and inference, and is applicable to a scenario with a large data amount and sufficient compute resources, for example, cloud computing, high-performance computing, and artificial intelligence.

Optionally, the small model has advantages such as lightweight, high efficiency, and easy deployment, and is applicable to a scenario with a small data amount and limited compute resources, for example, a mobile terminal application, an embedded device, and the internet of things.

In a possible implementation, after the first communication apparatus receives the second information, the method further includes: The first communication apparatus receives fourth information. The fourth information indicates to stop processing on the first AI model.

Based on the foregoing technical solution, after the first communication apparatus receives the second information used to determine the first AI model, the first communication apparatus may perform model processing based on the determined first AI model. Then, the first communication apparatus may further receive the fourth information indicating to stop processing on the first AI model, so that the first communication apparatus stops participating in processing of the first AI model group, thereby releasing resources of the first communication apparatus and reducing transmission overheads of input data and/or output data corresponding to the first AI model.

In addition, when K is greater than 1, a communication apparatus participating in the first AI model group, in addition to the first communication apparatus, may further include other K-1 communication apparatuses. The first communication apparatus may stop processing on the first AI model through an indication of the fourth information, so that pruning processing can be implemented on some AI models (for example, the first AI model), thereby removing a low-efficiency device/low-efficiency link and selecting a better (or optimal) collaboration set.

In a possible implementation, before the first communication apparatus receives the fourth information, the method further includes: The first communication apparatus sends fifth information. The fifth information is used to determine the fourth information, and the fifth information includes at least one of the following: input data or output data of the first AI model, dimension information of the input data of the first AI model or dimension information of the output data of the first AI model, a dimension expected by the first communication apparatus, a value range of the dimension expected by the first communication apparatus, and channel state information of the first communication apparatus.

Based on the foregoing technical solution, after the first communication apparatus receives the second information used to determine the first AI model, the first communication apparatus may perform model processing based on the determined first AI model. Then, the first communication apparatus may send the fifth information, so that the second communication apparatus determines the fourth information based on the at least one piece of information indicated by the fifth information. Therefore, the fourth information indicating the first communication apparatus to stop model processing may be determined based on the state information that is of the first communication apparatus and that is indicated by the fifth information, so that the second communication apparatus can implement pruning processing based on state information of one or more communication apparatuses in the collaboration set.

In a possible implementation, the method further includes: The first communication apparatus sends sixth information. The sixth information is used to request to stop processing on the first AI model.

Based on the foregoing technical solution, after the first communication apparatus receives the second information used to determine the first AI model, the first communication apparatus may perform model processing based on the determined first AI model. Then, the first communication apparatus may send the sixth information used to request to stop processing on the first AI model, so that the second communication apparatus determines the fourth information based on the sixth information. Therefore, the fourth information indicating the first communication apparatus to stop model processing may be determined based on a request of the first communication apparatus, so that the second communication apparatus can implement pruning processing based on requests of one or more communication apparatuses in the collaboration set.

Optionally, the first communication apparatus may determine (or send) the sixth information based on a plurality of trigger conditions. For example, the trigger condition may include one or more of the following: The first communication apparatus determines that a channel state indicated by the channel state information is lower than or equal to a threshold, the first communication apparatus determines that computational power indicated by computational power status information of the first communication apparatus is lower than or equal to a threshold, and the first communication apparatus determines that a dimension indicated by dimension information of input data or dimension information of output data of the first AI model is lower than a threshold.

A second aspect of this application provides a communication method. The method is performed by a second communication apparatus. The second communication apparatus may be a communication device (for example, a network device or a terminal device), or the second communication apparatus may be some components (for example, a processor, a chip, or a chip system) in the communication device, or the second communication apparatus may be a logic module or software that can implement all or some functions of the communication device. In the method, the second communication apparatus receives first information. The second communication apparatus determines a first AI model group based on the first information, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are deployed on M communication apparatuses, the M communication apparatuses include the first communication apparatus, and M is less than or equal to K. The second communication apparatus sends second information. The second information is used to determine a first AI model, the first AI model is deployed on the first communication apparatus, and the first AI model includes one or more of the K AI models.

Based on the foregoing technical solution, the second communication apparatus serves as a receiver of the first information. The second communication apparatus may determine the first AI model group based on the first information from the first communication apparatus, and send, to the first communication apparatus, the second information used to determine a first AI model in the first AI model group. Therefore, when a communication apparatus in a communication system serves as an AI participating node, computational power of the communication apparatus can be used for AI model processing, while the first information from the first communication apparatus can also be used as one of determining bases for the second communication apparatus to determine an AI model. In this way, the AI model determined by the second communication apparatus can adapt to the first communication apparatus as much as possible, thereby improving processing performance of subsequent model processing performed by the first communication apparatus based on the AI model.

In a possible implementation, before the second communication apparatus sends the second information, the method further includes: The second communication apparatus sends third information. The third information is used to configure a mapping relationship between P pieces of dimension information and Q indexes, both P and Q are positive integers, the second information includes one or more indexes of the Q indexes, and the one or more indexes are used to determine one piece of dimension information in the P pieces of dimension information.

Based on the foregoing technical solution, the second communication apparatus may send the third information used to configure the mapping relationship between the P pieces of dimension information and the Q indexes. Then, the second information sent by the second communication apparatus may include one or more indexes of the Q indexes. In addition, the first communication apparatus may determine one piece of dimension information in the P pieces of dimension information based on the one or more indexes. Therefore, in an implementation in which the mapping relationship is configured by using the third information, the second information sent by the second communication apparatus may indicate the dimension information by carrying an index, so that indication overheads can be reduced.

Optionally, the third information is layer-3 signaling, and the second information is layer-1 signaling and/or layer-2 signaling.

In a possible implementation, the second information includes at least one of the following: a model parameter of the first AI model, a model parameter of the first AI model group, dimension information of input data of the first AI model, and dimension information of output data of the first AI model.

It may be understood that when the second information includes the dimension information of the input data of the first AI model and/or the dimension information of the output data of the first AI model, the first communication apparatus may update an initial model based on the dimension information of the input data and/or the dimension information of the output data, to obtain the first AI model. Optionally, the initial model may be a model pre-configured on the first communication apparatus, or may be a model (for example, a third AI model described below) configured by the second communication apparatus. This is not limited herein.

Based on the foregoing technical solution, the second information used to determine the first AI model may include at least one of the foregoing. In other words, the second communication apparatus may deploy the first AI model on the first communication apparatus by using at least one of the foregoing, to improve flexibility of implementing the solution.

Optionally, the second information may be sent by using one message/signaling, or may be sent by using a plurality of messages/signaling. This is not limited herein.

In a possible implementation, the first information includes first dimension information or second dimension information. When the input of the first AI model includes the output of the second AI model, the first dimension information is used to determine the dimension information of the input data of the first AI model or dimension information of output data of the second AI model. When the input of the second AI model includes the output of the first AI model, the second dimension information is used to determine the dimension information of the output data of the first AI model or dimension information of input data of the second AI model.

Based on the foregoing technical solution, the second communication apparatus may determine, by using the first information, dimension information of data transmitted over the communication link. However, when a communication bandwidth between the first communication apparatus and the second communication apparatus is fixed, because a dimension of data transmitted over the communication link is associated with processing performance of the AI model, in this manner, an implementation process in which the second communication apparatus determines the first AI model group can be simplified, complexity of the second communication apparatus is reduced, and processing performance of AI models included in the first AI model group can be improved.

In a possible implementation, the dimension information includes at least one of the following: an upper limit of a dimension, a lower limit of a dimension, a dimension expected by the first communication apparatus, and a value range of the dimension expected by the first communication apparatus.

Optionally, the dimension information may include a value of the at least one of the foregoing, a quantized value of the value of the at least one item, an index of the value of the at least one of the foregoing, an index of the quantized value of the value of the at least one of the foregoing, or the like, or may be implemented in another manner. This is not limited herein.

Based on the foregoing technical solution, the dimension information determined by the first dimension information or the second dimension information may include at least one of the foregoing, to improve flexibility of implementing the solution.

For example, when the dimension information includes the upper limit of the dimension and/or the lower limit of the dimension, the second communication apparatus may use a range indicated by the upper limit and/or the lower limit as one of determining bases of the AI model, so that flexibility of implementing the solution can be improved.

For another example, when the dimension information includes the dimension expected by the first communication apparatus and/or the value range of the dimension expected by the first communication apparatus, the AI model determined by the second communication apparatus based on the dimension information can meet an expectation of the first communication apparatus.

In a possible implementation, the first dimension information or the second dimension information is determined based on channel state information.

Based on the foregoing technical solution, the first dimension information or the second dimension information included in the first information may be determined based on the channel state information, so that the first dimension information or the second dimension information can reflect a channel characteristic of a wireless channel between the first communication apparatus and the second communication apparatus to some extent, and an AI model that can be subsequently obtained based on the first information can adapt to the channel characteristic of the wireless channel, to improve transmission performance of AI data corresponding to the AI model. In addition, when the AI model obtained based on the first information can adapt to the channel characteristic of the wireless channel, transmission data of the radio link can also meet a channel bandwidth requirement as much as possible, thereby improving model performance of the AI models included in the first AI model group.

In a possible implementation, the first information includes at least one of the following: the input data of the first AI model, label data of the input data of the first AI model, local computational power status information of the first communication apparatus, and the channel state information.

Based on the foregoing technical solution, the first information may include at least one piece of the foregoing information, so that the second communication apparatus can determine, based on the at least one piece of the foregoing information, the first AI model group adapted to the first communication apparatus. For a specific possible implementation of the first information, refer to related content in the first aspect. Details are not described herein again.

In a possible implementation, after the second communication apparatus sends the second information, the method further includes: The second communication apparatus sends fourth information. The fourth information indicates to stop processing on the first AI model.

Based on the foregoing technical solution, after the first communication apparatus receives the second information used to determine the first AI model, the first communication apparatus may perform model processing based on the determined first AI model. Then, the second communication apparatus may further send the fourth information indicating to stop processing on the first AI model, so that the first communication apparatus stops participating in processing of the first AI model group, thereby releasing resources of the first communication apparatus and reducing transmission overheads of input data and/or output data corresponding to the first AI model.

In addition, when K is greater than 1, a communication apparatus participating in the first AI model group, in addition to the first communication apparatus, may further include other K-1 communication apparatuses. The first communication apparatus may stop processing on the first AI model through an indication of the fourth information, so that pruning processing can be implemented on some AI models (for example, the first AI model), thereby removing a low-efficiency device/low-efficiency link and selecting a better (or optimal) collaboration set.

In a possible implementation, before the second communication apparatus sends the fourth information, the method further includes: The second communication apparatus receives fifth information. The fifth information is used to determine the fourth information, and the fifth information includes at least one of the following: input data or output data of the first AI model, dimension information of the input data of the first AI model or dimension information of the output data of the first AI model, a dimension expected by the first communication apparatus, a value range of the dimension expected by the first communication apparatus, and channel state information of the first communication apparatus.

Based on the foregoing technical solution, after the first communication apparatus receives the second information used to determine the first AI model, the first communication apparatus may perform model processing based on the determined first AI model. Then, the second communication apparatus may receive the fifth information, so that the second communication apparatus determines the fourth information based on the at least one piece of information indicated by the fifth information. Therefore, the fourth information indicating the first communication apparatus to stop model processing may be determined based on the state information that is of the first communication apparatus and that is indicated by the fifth information, so that the second communication apparatus can implement pruning processing based on state information of one or more communication apparatuses in the collaboration set.

In a possible implementation, the method further includes: The second communication apparatus receives sixth information. The sixth information is used to request to stop processing on the first AI model.

Based on the foregoing technical solution, after the first communication apparatus receives the second information used to determine the first AI model, the first communication apparatus may perform model processing based on the determined first AI model. Then, the second communication apparatus may receive the sixth information used to request to stop processing on the first AI model, so that the second communication apparatus determines the fourth information based on the sixth information. Therefore, the fourth information indicating the first communication apparatus to stop model processing may be determined based on a request of the first communication apparatus, so that the second communication apparatus can implement pruning processing based on requests of one or more communication apparatuses in the collaboration set.

A third aspect of this application provides a communication method. The method is performed by a first communication apparatus. The first communication apparatus may be a communication device (for example, a terminal device), or the first communication apparatus may be some components (for example, a processor, a chip, or a chip system) in the communication device, or the first communication apparatus may be a logic module or software that can implement all or some functions of the communication device. In the method, the first communication apparatus performs model processing based on a first AI model, and the first AI model and a second AI model are included in a first AI model group. The first AI model is deployed on the first communication apparatus, and the second AI model is deployed on a second communication apparatus. An input of the first AI model includes an output of the second AI model, or an input of the second AI model includes an output of the first AI model. The first communication apparatus receives fourth information. The fourth information indicates to stop processing on the first AI model.

Based on the foregoing technical solution, in a process in which the first communication apparatus performs model processing based on the first AI model, the first communication apparatus may receive the fourth information indicating to stop processing on the first AI model, so that the first communication apparatus stops participating in processing of the first AI model group, thereby releasing resources of the first communication apparatus and reducing transmission overheads of input data and/or output data corresponding to the first AI model.

In a possible implementation, the first AI model group further includes Z AI models, Z is a positive integer, and an input of any one of the Z AI models includes the output of the second AI model, or the input of the second AI model includes an output of any one or more of the Z AI models.

Based on the foregoing technical solution, in addition to the first AI model deployed on the first communication apparatus and the second AI model deployed on the second communication apparatus, the first AI model group may further include the Z AI models deployed on another communication apparatus. In other words, a communication apparatus participating in the first AI model group, in addition to the first communication apparatus, may further include other communication apparatuses. The first communication apparatus may stop processing on the first AI model through an indication of the fourth information, so that pruning processing can be implemented on some AI models (for example, the first AI model), thereby removing a low-efficiency device/low-efficiency link and selecting a better (or optimal) collaboration set.

In a possible implementation, before the first communication apparatus receives the fourth information, the method further includes: The first communication apparatus sends fifth information. The fifth information is used to determine the fourth information, and the fifth information includes at least one of the following: input data or output data of the first AI model, dimension information of the input data of the first AI model or dimension information of the output data of the first AI model, a dimension expected by the first communication apparatus, a value range of the dimension expected by the first communication apparatus, and channel state information of the first communication apparatus.

Based on the foregoing technical solution, the first communication apparatus may send the fifth information, so that the second communication apparatus determines the fourth information based on the at least one piece of information indicated by the fifth information. Therefore, the fourth information indicating the first communication apparatus to stop model processing may be determined based on the state information that is of the first communication apparatus and that is indicated by the fifth information, so that the second communication apparatus can implement pruning processing based on state information of one or more communication apparatuses in the collaboration set.

In a possible implementation, the method further includes: The first communication apparatus sends sixth information. The sixth information is used to request to stop processing on the first AI model.

Based on the foregoing technical solution, the first communication apparatus may send the sixth information used to request to stop processing on the first AI model, so that the second communication apparatus determines the fourth information based on the sixth information. Therefore, the fourth information indicating the first communication apparatus to stop model processing may be determined based on a request of the first communication apparatus, so that the second communication apparatus can implement pruning processing based on requests of one or more communication apparatuses in the collaboration set.

Optionally, the first communication apparatus may determine (or send) the sixth information based on a plurality of trigger conditions. For example, the trigger condition may include one or more of the following: The first communication apparatus determines that a channel state indicated by the channel state information is lower than or equal to a threshold, the first communication apparatus determines that computational power indicated by computational power status information of the first communication apparatus is lower than or equal to a threshold, and the first communication apparatus determines that a dimension indicated by dimension information of input data or dimension information of output data of the first AI model is lower than a threshold.

A fourth aspect of this application provides a communication method. The method is performed by a second communication apparatus. The second communication apparatus may be a communication device (for example, a network device or a terminal device), or the second communication apparatus may be some components (for example, a processor, a chip, or a chip system) in the communication device, or the second communication apparatus may be a logic module or software that can implement all or some functions of the communication device. In the method, the second communication apparatus determines fourth information. The fourth information indicates to stop processing on a first AI model, and the first AI model and a second AI model are included in a first AI model group. The first AI model is deployed on a first communication apparatus, and the second AI model is deployed on the second communication apparatus. An input of the first AI model includes an output of the second AI model, or an input of the second AI model includes an output of the first AI model. The second communication apparatus sends the fourth information.

Based on the foregoing technical solution, in a process in which the first communication apparatus performs model processing based on the first AI model, the second communication apparatus may send the fourth information indicating to stop processing on the first AI model, so that the first communication apparatus stops participating in processing of the first AI model group, thereby releasing resources of the first communication apparatus and reducing transmission overheads of input data and/or output data corresponding to the first AI model.

In a possible implementation of the fourth aspect, the first AI model group further includes Z AI models, and an input of any one of the Z AI models includes the output of the second AI model, or the input of the second AI model includes an output of any one or more of the Z AI models.

Based on the foregoing technical solution, in addition to the first AI model deployed on the first communication apparatus and the second AI model deployed on the second communication apparatus, the first AI model group may further include the Z AI models deployed on another communication apparatus. In other words, a communication apparatus participating in the first AI model group, in addition to the first communication apparatus, may further include other communication apparatuses. The first communication apparatus may stop processing on the first AI model through an indication of the fourth information, so that pruning processing can be implemented on some AI models (for example, the first AI model), thereby removing a low-efficiency device/low-efficiency link and selecting a better (or optimal) collaboration set.

In a possible implementation of the fourth aspect, before the second communication apparatus sends the fourth information, the method further includes: The second communication apparatus receives fifth information. The fifth information is used to determine the fourth information, and the fifth information includes at least one of the following: input data or output data of the first AI model, dimension information of the input data of the first AI model or dimension information of the output data of the first AI model, a dimension expected by the first communication apparatus, a value range of the dimension expected by the first communication apparatus, and channel state information of the first communication apparatus.

Based on the foregoing technical solution, the second communication apparatus may receive the fifth information, so that the second communication apparatus determines the fourth information based on the at least one piece of information indicated by the fifth information. Therefore, the fourth information indicating the first communication apparatus to stop model processing may be determined based on the state information that is of the first communication apparatus and that is indicated by the fifth information, so that the second communication apparatus can implement pruning processing based on state information of one or more communication apparatuses in the collaboration set.

In a possible implementation of the fourth aspect, the method further includes: The second communication apparatus receives sixth information. The sixth information is used to request to stop processing on the first AI model.

Based on the foregoing technical solution, the second communication apparatus may receive the sixth information used to request to stop processing on the first AI model, so that the second communication apparatus determines the fourth information based on the sixth information. Therefore, the fourth information indicating the first communication apparatus to stop model processing may be determined based on a request of the first communication apparatus, so that the second communication apparatus can implement pruning processing based on requests of one or more communication apparatuses in the collaboration set.

A fifth aspect of this application provides a communication apparatus. The apparatus is a first communication apparatus, and the apparatus includes a transceiver unit and a processing unit. The processing unit is configured to determine first information, and the transceiver unit is configured to send the first information. The first information is used to determine a first AI model group, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are configured to be deployed on M communication apparatuses, the M communication apparatuses include the first communication apparatus, and M is less than or equal to K. The transceiver unit is configured to receive second information. The second information is used to determine a first AI model, and the first AI model includes one or more of the K AI models.

In the fifth aspect of this application, a composition module of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus is a second communication apparatus, and the apparatus includes a transceiver unit and a processing unit. The transceiver unit receives first information. The processing unit is configured to determine a first AI model group based on the first information, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are deployed on M communication apparatuses, the M communication apparatuses include the first communication apparatus, and M is less than or equal to K. The transceiver unit is further configured to send second information. The second information is used to determine a first AI model, the first AI model is deployed on the first communication apparatus, and the first AI model includes one or more of the K AI models.

In the sixth aspect of this application, a composition module of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus is a first communication apparatus, and the apparatus includes a transceiver unit and a processing unit. The processing unit is configured to perform model processing based on a first AI model. The first AI model and a second AI model are included in a first AI model group. The first AI model is deployed on the first communication apparatus, and the second AI model is deployed on a second communication apparatus. An input of the first AI model includes an output of the second AI model, or an input of the second AI model includes an output of the first AI model. The transceiver unit is configured to receive fourth information. The fourth information indicates to stop processing on the first AI model.

A composition module of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus is a second communication apparatus, and the apparatus includes a transceiver unit and a processing unit. The processing unit is configured to determine fourth information. The fourth information indicates to stop processing on a first AI model, and the first AI model and a second AI model are included in a first AI model group. The first AI model is deployed on the first communication apparatus, and the second AI model is deployed on the second communication apparatus. An input of the first AI model includes an output of the second AI model, or an input of the second AI model includes an output of the first AI model. The transceiver unit is configured to send the fourth information.

A composition module of the communication apparatus may be further configured to: perform the steps performed in the possible implementations of the fourth aspect, and achieve corresponding technical effects. For details, refer to the fourth aspect. Details are not described herein again.

A ninth aspect of this application provides a communication apparatus, including at least one processor. The at least one processor is coupled to a memory, and the memory is configured to store a program or instructions. The at least one processor is configured to execute the program or the instructions, so that the apparatus implements the method according to any possible implementation in any one of the first aspect to the fourth aspect.

In a possible implementation, the communication apparatus further includes the memory. Optionally, the processor and the memory are integrated together.

A tenth aspect of this application provides a communication apparatus, including at least one logic circuit and an input/output interface. The logic circuit is configured to perform the method according to any possible implementation in any one of the first aspect to the fourth aspect.

An eleventh aspect of this application provides a communication system. The communication system includes the first communication apparatus and the second communication apparatus.

A twelfth aspect of this application provides a computer-readable storage medium. The storage medium is configured to store one or more computer-executable instructions. When the computer-executable instructions are executed by a processor, the processor performs the method according to any possible implementation in any one of the first aspect to the fourth aspect.

A thirteenth aspect of this application provides a computer program product (also referred to as a computer program). When the computer program in the computer program product is executed by a processor, the processor performs the method according to any possible implementation in any one of the first aspect to the fourth aspect.

A fourteenth aspect of this application provides a chip system. The chip system includes at least one processor configured to support a communication apparatus in implementing the method according to any possible implementation in any one of the first aspect to the fourth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design in the fifth aspect to the fourteenth aspect, refer to the technical effects brought by different designs in the first aspect to the fourth aspect. Details are not described herein again.

### BRIEF DESCRIPTION OF DRAWINGS

FIG. 1a and FIG. 1b are diagrams of communication systems according to this application;
FIG. 2a to FIG. 2g are diagrams of AI processing processes according to this application;
FIG. 3 to FIG. 6 are interaction diagrams of communication methods according to this application; and
FIG. 7 to FIG. 11 are diagrams of communication apparatuses according to this application.

### DESCRIPTION OF EMBODIMENTS

First, some terms in embodiments of this application are explained and described, to facilitate understanding of a person skilled in the art.
(1) Terminal device: The terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the internet by using a radio access network (radio access network, RAN). The terminal device may be a mobile terminal device, for example, a mobile phone (or referred to as a "cellular" phone, or a mobile phone (mobile phone)), a computer, or a data card. For example, the wireless terminal device may be a portable, pocket-sized, handheld, computer built-in, or in-vehicle mobile apparatus that exchanges voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile console (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), a user equipment (user equipment, UE), a mobile terminal (mobile terminal, MT), or the like.

As an example instead of a limitation, in embodiments of this application, the terminal device may alternatively be a wearable device. The wearable device may also be referred to as a wearable intelligent device, an intelligent wearable device, or the like, and is a general term for wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud-based interaction. In a broad sense, wearable intelligent devices include full-featured and large-sized devices that can implement all or some of functions without relying on smartphones, for example, smart watches or smart glasses, and include devices that focus only on a specific type of application function and need to be used together with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an internet of things (internet of things, IoT) device.

In embodiments of this application, the terminal device may further obtain an AI service provided by a network device. Optionally, the terminal device may further have an AI processing capability.

(2) Network device: The network device may be a device in a wireless network. For example, the network device may be a RAN node (or device) through which a terminal device accesses the wireless network, and may also be referred to as a base station. Currently, some examples of the RAN device are a base station (base station), an evolved NodeB (evolved NodeB, eNodeB), a base station gNB (gNodeB) in the 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point AP, and the like. In addition, in a network structure, the network device may include a central unit (central unit, CU) node, a distributed unit (distributed unit, DU) node, or a RAN device including a CU node and a DU node.

Optionally, the RAN node may alternatively be a macro base station, a micro base station or an indoor base station, a relay node or a donor node, or a radio controller in a cloud radio access network (cloud radio access network, CRAN) scenario. The RAN node may alternatively be a server, a wearable device, a vehicle, a vehicle-mounted device, or the like. For example, an access network device in a V2X technology may be a roadside unit (roadside unit, RSU).

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented by using a software module, a hardware module, or a combination of a software module and a hardware module.

Communication between the access network device and the terminal device complies with a specific protocol layer structure. The protocol layer may include a control plane protocol layer and a user plane protocol layer. The control plane protocol layer may include at least one of the following: an RRC layer, a PDCP layer, an RLC layer, a MAC layer, a physical layer, or the like. The user plane protocol layer may include at least one of the following: an SDAP layer, a PDCP layer, an RLC layer, a MAC layer, a physical layer, or the like.

For a correspondence between network elements in the ORAN system and protocol layer functions that may be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), a public data network gateway (public data network gateway, PDN gateway, P-GW) in a 4th generation (4th generation, 4G) network, an access and mobility management function (access and mobility management function, AMF), a user plane function (user plane function, UPF), or a session management function (session management function, SMF) in a 5G network. In addition, the core network device may further include another core network device in the 5G network and a next generation network of the 5G network.

In embodiments of this application, the network device may alternatively be a network node having an AI capability, and may provide an AI service for a terminal or another network device, for example, may be an AI node, a computational power node, a RAN node having an AI capability, or a core network element having an AI capability on a network side (an access network or a core network).

In embodiments of this application, an apparatus configured to implement a function of the network device may be a network device, or may be an apparatus, for example, a chip system, that can support the network device in implementing the function. The apparatus may be mounted in the network device. In technical solutions provided in embodiments of this application, an example in which the apparatus configured to implement the function of the network device is a network device is used for describing the technical solutions provided in embodiments of this application.

(3) Configuration and pre-configuration: In this application, both the configuration and the pre-configuration are used. The configuration means that a network device/a server sends configuration information of some parameters or values of the parameters to a terminal by using a message or signaling, so that the terminal determines, based on the values or the information, a communication parameter or a resource used during transmission. Similar to the configuration, the pre-configuration may be parameter information or a parameter value negotiated by a network device/a server with a terminal device in advance, or may be parameter information or a parameter value used by a base station/a network device or a terminal device as specified in a standard protocol, or may be parameter information or a parameter value pre-stored in a base station/a server or a terminal device. This is not limited in this application.

Further, these values and parameters may be changed or updated.
(4) Terms "system" and "network" in embodiments of this application may be used interchangeably. "A plurality of" means two or more than two. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following" or a similar expression means any combination of these items, including any combination of a single item or a plurality of items. For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.
(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "outputting" of a chip interface, and the "receiving" may alternatively be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on information between the source end for sending the information and the destination end, but the destination end may understand valid information from the source end. Similar expressions in this application may be understood similarly. Details are not described again.

(6) In embodiments of this application, "indication" may include a direct indication and an indirect indication, or may include an explicit indication and an implicit indication. Information indicated by specific information (for example, the following indication information) is referred to as to-be-indicated information. In a specific implementation process, the to-be-indicated information may be indicated in a plurality of manners, for example, but not limited to, directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of a plurality of pieces of information that is pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be used to determine the to-be-indicated information.

In this application, unless otherwise specified, mutual reference may be made between same or similar parts of various embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

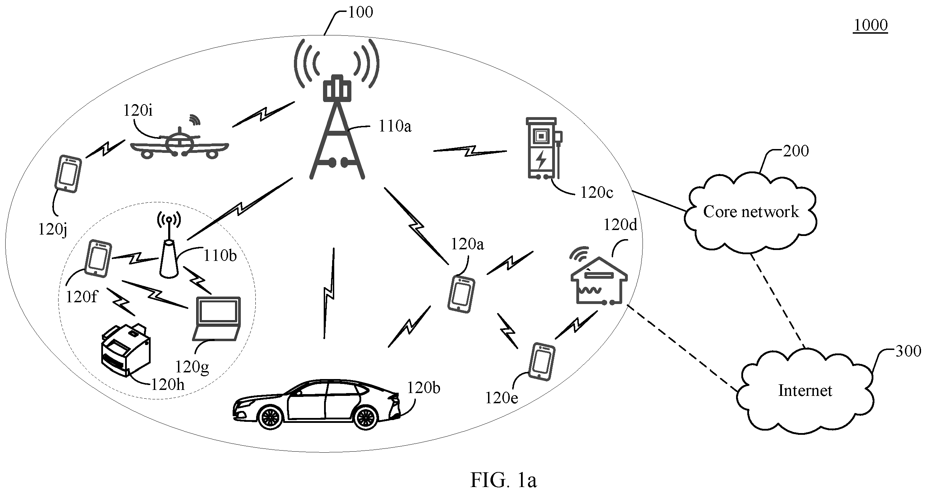

FIG. 1a is a diagram of an architecture of a communication system 1000 to which an embodiment of this application is applied. As shown in FIG. 1a, the communication system includes a RAN 100 and a core network 200. Optionally, the communication system 1000 may further include an internet 300. The RAN 100 may include at least one RAN node (for example, 110a and 110b in FIG. 1a, which are collectively referred to as 110), and may further include at least one terminal (for example, 120a to 120j in FIG. 1a, which are collectively referred to as 120). The RAN 100 may further include another RAN node, for example, a wireless relay device and/or a wireless backhaul device (not shown in FIG. 1a). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, an NR system, or a future radio access system defined in 3rd generation partnership project (3rd generation partnership project, 3GPP). The RAN 100 may further include the foregoing two or more different radio access systems. The RAN 100 may alternatively be an open RAN (open RAN, O-RAN).

For ease of description, the following uses a base station as an example of the RAN node for description.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1a may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1a each may be referred to as a communication apparatus having a base station function, and 120a to 120j in FIG. 1a each may be referred to as a communication apparatus having a terminal function.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

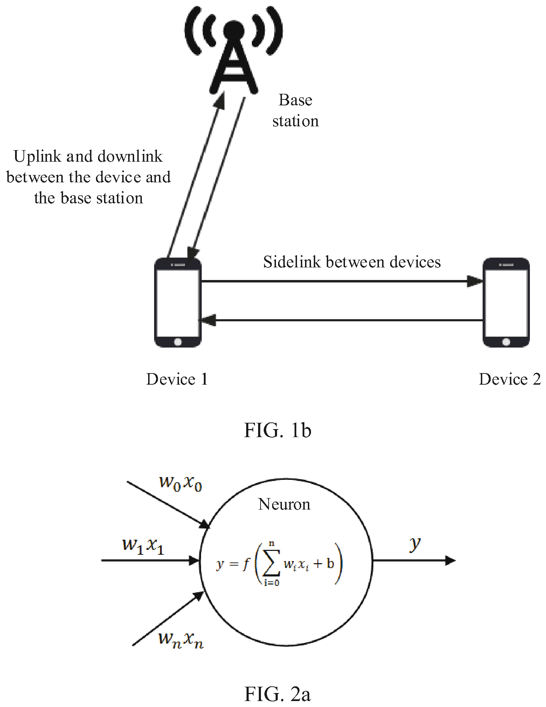

FIG. 1b is another diagram of a communication system according to an embodiment of this application. In FIG. 1b, an example in which a network device is a base station is used for description, and both a device 1 and a device 2 are terminal devices. As shown in FIG. 1b, a communication link between the device 1 and the device 2 may be referred to as a sidelink (sidelink, SL), and a communication link between the device 1 (or the device 2) and the base station may be referred to as an uplink and downlink, including an uplink (uplink) and a downlink (downlink). It can be learned that the sidelink is a communication mechanism in which different terminal devices directly communicate with each other without the network device.

Optionally, in the SL, a transmitting device and a receiving device may usually be terminal devices or network devices of a same type, or may be an RSU and a terminal device. From a perspective of a physical entity, the RSU is a roadside station or a roadside unit. From a perspective of a function, the RSU may be a terminal device or a network device. This is not limited in this application. In other words, the transmitting device is a terminal device, and the receiving device is also a terminal device. Alternatively, the transmitting device is a roadside station, and the receiving device is a terminal device. Alternatively, the transmitting device is a terminal device, and the receiving device is a roadside station. In addition, the sidelink may alternatively be a link between base station devices of a same type or different types. In this case, a function of the sidelink is similar to that of a relay link, but an air interface technology used by the sidelink may be the same as or different from that used by the relay link.

For example, broadcast, unicast, and multicast are supported on the sidelink.

When a terminal device (for example, the device 1) directly communicates with another terminal device (for example, the device 2) without using a network device, the two terminal devices may communicate based on a proximity-based services communication 5 (proximity-based services communication 5, PC5) interface.

As a typical application of the sidelink, V2X communication uses and enhances current cellular network functions and elements, to implement low-latency and high-reliability communication between various nodes in a vehicle network, including vehicle-to-vehicle (Vehicle-to-Vehicle, V2V for short) communication, vehicle-to-pedestrian (Vehicle-to-Pedestrian, V2P for short) communication, vehicle-to-infrastructure (Vehicle-to-Infrastructure, V2I for short) communication, or vehicle-to-network (Vehicle-to-Network, V2N for short) communication.

The technical solutions provided in this application may be applied to a wireless communication system (for example, the system shown in FIG. 1a or FIG. 1b). For example, an AI network element may be introduced to the communication system provided in this application to implement some or all AI-related operations. The AI network element may also be referred to as an AI node, an AI device, an AI entity, an AI module, an AI model, an AI unit, or the like. The AI network element may be built in a network element in the communication system. For example, the AI network element may be an AI module built in a terminal device, an access network device, a core network device, a cloud server, or an operation, administration and maintenance (operation, administration and maintenance, OAM), to implement an AI-related function. The OAM may serve as a network management system of the core network device and/or as a network management system of the access network device. Alternatively, the AI network element may be an independently disposed network element in the communication system. Optionally, the terminal or the chip built in the terminal may alternatively include the AI entity, configured to implement the AI-related function.

The following briefly describes artificial intelligence (artificial intelligence, AI) that may be used in this application.

AI enables machines to have human intelligence, for example, enables machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

In terms of the supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through the supervised learning may include linear mapping or non-linear mapping. A learning task may be classified into a classification task and a regression task based on a type of a label.

In terms of the unsupervised learning, an internal pattern of a sample is explored autonomously by using an algorithm based on a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from the supervised learning and the unsupervised learning, the reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and a better (for example, an optimal) decision action. However, a label of "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can approximate any continuous function in theory, so that the neural network has a capability of learning any mapping. In a conventional communication system, rich expertise is required to design a communication module. However, in a neural network-based deep learning communication system, an implicit pattern structure may be automatically discovered from a large quantity of datasets and a mapping relationship between data may be established, to obtain performance better than that of a conventional modeling method.

An idea of the neural network comes from a neuron structure of brain tissue. For example, each neuron performs a weighted summation operation on input values of the neuron, and outputs an operation result through an activation function.

FIG. 2a is a diagram of a neuron structure. It is assumed that inputs of a neuron are *x =* [*x*₀, *x*₁*, ... , xₙ*], and weights corresponding to the inputs are respectively *w* = [w, *w*₁*,* ..., *wₙ*], where n is a positive integer, *wᵢ* and *xᵢ* may be various possible types such as a decimal, an integer (for example, 0, a positive integer, or a negative integer), or a complex number. *wᵢ* is used as a weight of *xᵢ*, and is used to weight *xᵢ*. A bias for performing weighted summation on input values based on the weights is, for example, b. There may be a plurality of forms of the activation function. Assuming that an activation function of a neuron is y = *f*(*z*) = max(0, *z*), an output of the neuron is $y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$. For another example, if an activation function of a neuron is y = *f*(*z*) *= z,* an output of the neuron is $y = f \left({\sum }_{i = 0}^{i = n} {w}_{i} ∗ {x}_{i} + b\right) = {\sum }_{i = 0}^{i = n} {w}_{i} ∗ {x}_{i} + b$ . Herein, b may be of various possible types such as a decimal, an integer (for example, 0, a positive integer, or a negative integer), or a complex number. Activation functions of different neurons in the neural network may be the same or different.

In addition, the neural network usually includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

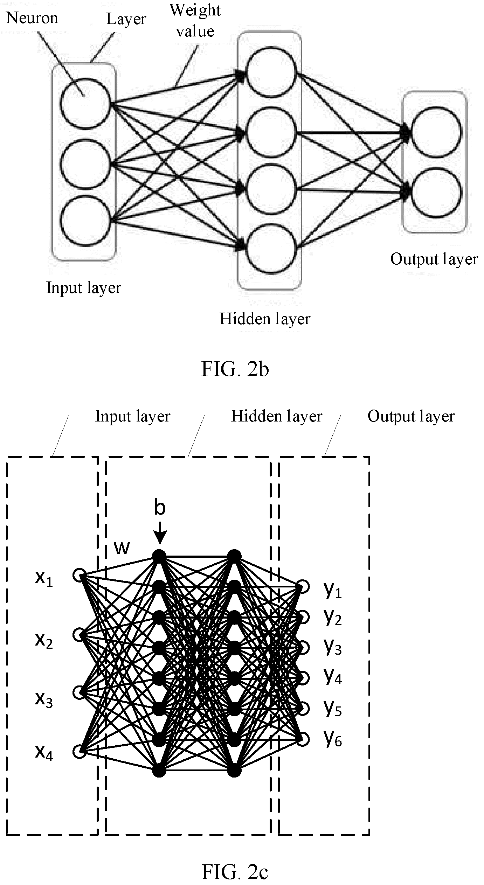

FIG. 2b is a diagram of an FNN network. A feature of the FNN network is that neurons at adjacent layers are completely connected to each other. Due to this feature, the FNN usually requires a large amount of storage space, resulting in high computing complexity.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation by using all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs to the RNN include a new input value at a current moment and an output value of the RNN at a previous moment. The RNN is suitable for obtaining a sequence feature having a time correlation, and is especially suitable for applications such as speech recognition and channel encoding and decoding.

In the foregoing model training process of machine learning, a loss function may be defined. The loss function describes a gap or a difference between an output value of the model and an ideal target value. The loss function may be expressed in a plurality of forms, and a specific form of the loss function is not limited. The model training process may be considered as the following process: Some or all of parameters of the model are adjusted, so that a value of the loss function is less than a threshold or meets a target requirement.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model deduction (also referred to as model inference, inference, prediction, or the like), model monitoring or model verification, inference result release, or the like. The AI function may also be referred to as an AI (-related) operation or an AI-related function.

The following describes an example of an implementation process of a neural network with reference to the accompanying drawings.
1. A fully-connected neural network is also referred to as a multilayer perceptron (multilayer perceptron, MLP).

As shown in FIG. 2c, one MLP includes one input layer (left side), one output layer (right side), and a plurality of hidden layers (middle). Each layer of the MLP includes several nodes, which are referred to as neurons. Neurons at two adjacent layers are connected to each other in pairs.

Optionally, in consideration of neurons at two adjacent layers, an output h of a neuron at a lower layer is a weighted sum of all neurons x at an upper layer connected to the neuron at the lower layer, and may be expressed, by using an activation function, as: $h = f \left(wx+b\right) .$

Herein, w is a weight matrix, b is a bias vector, and f is the activation function.

Further optionally, an output of the neural network may be recursively expressed as: $y = {f}_{n} \left({w}_{n}{f}_{n - 1}\left(…\right)+{b}_{n}\right) .$

Herein, n is an index of the neural network layer, 1≤n≤N, and N is a total quantity of layers of the neural network.

In other words, the neural network may be understood as a mapping relationship from an input data set to an output data set. The neural network is usually initialized randomly, and a process of obtaining the mapping relationship from random w and b by using existing data is referred to as training of the neural network.

Optionally, a specific training manner is to evaluate an output result of the neural network by using a loss function (loss function).

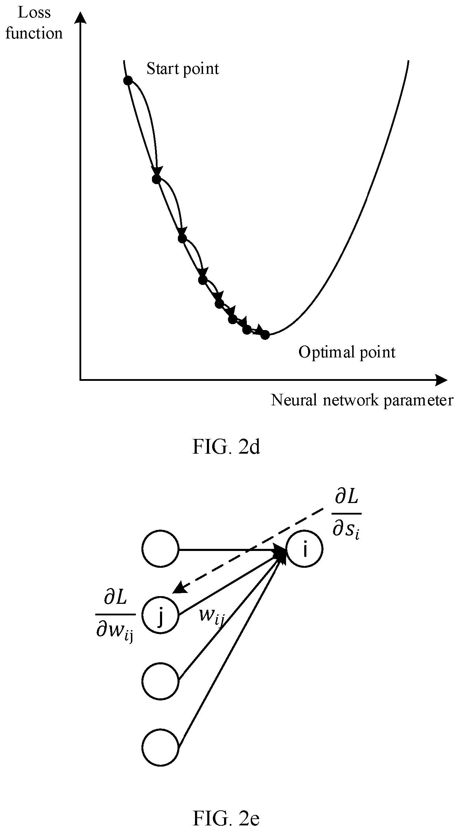

As shown in FIG. 2d, an error may be backpropagated, and neural network parameters (including *w* and *b*) can be iteratively optimized by using a gradient descent method until the loss function reaches a minimum value, that is, "a relatively good point (for example, an optimal point)" in FIG. 2d. It may be understood that a neural network parameter corresponding to "the relatively good point (for example, the optimal point)" in FIG. 2d may be used as a neural network parameter in trained AI model information.

Further optionally, a gradient descent process may be expressed as: $θ ← θ - η \frac{\partial L}{\partial θ} .$

Herein, ***θ*** is a to-be-optimized parameter (including w and b), L is a loss function, η is a learning rate that controls a gradient descent step, ∂ represents a derivative operation, and $\frac{\partial L}{\partial θ}$ represents a derivative of *L* with respect to ***θ***.

Further optionally, a backpropagation process uses a chain method for obtaining a bias.

As shown in FIG. 2e, a gradient of a parameter at a previous layer may be obtained by recursive calculation of a gradient of a parameter at a next layer, and may be expressed as: $\frac{\partial L}{\partial {w}_{i j}} = \frac{\partial L}{\partial {s}_{i}} \frac{\partial {s}_{i}}{\partial {w}_{ij}} .$

Herein, wᵢⱼ is a weight of connecting a node j to a node i, and sᵢ is an input weighted sum on the node i.

### 2. Federated learning (Federated Learning, FL)

A concept of the federated learning is proposed to effectively resolve difficulties faced by the current development of artificial intelligence. While ensuring user data privacy and security, the federated learning facilitates various edge devices and a server at a central end to collaborate to efficiently complete a learning task of a model.

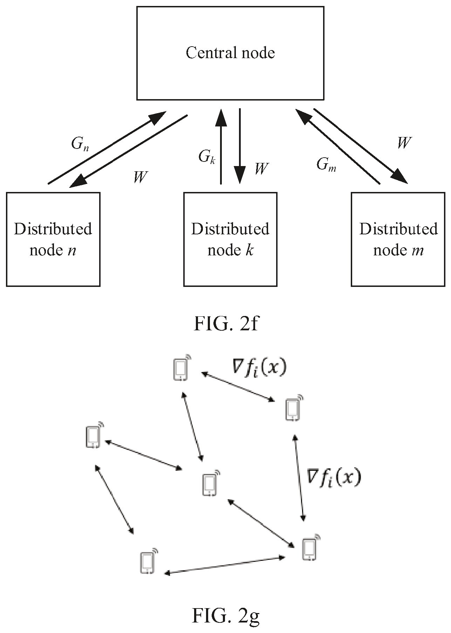

As shown in FIG. 2f, an FL architecture is a training architecture in the current FL field. For example, a FedAvg algorithm is a basic algorithm of the FL, and an algorithm process of the FedAvg algorithm is roughly as follows:
(1) A central end initializes to-be-trained model ${w}_{g}^{0}$ and broadcasts the model to all client devices.
(2) In a *t* ∈ [1, *T*]^{th} round, a client *k* ∈ [1, *K*] trains a received global model ${w}_{g}^{t - 1}$ based on a local dataset 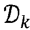 for *E* epochs to obtain a local training result ${w}_{k}^{t}$, and then reports the local training result to a central node.
(3) The central node aggregates local training results from all (or some) clients. It is assumed that a set of clients that upload local models in a *t*^{th} round is 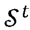 The central end performs weighted averaging by using a quantity of samples of a corresponding client as a weight to obtain a new global model. A specific update rule is 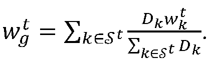 Then, the central end broadcasts a global model ${w}_{g}^{t}$ of a latest version to all client devices for a new round of training.
(4) Steps (2) and (3) are repeated until the model converges finally or a quantity of training rounds reaches an upper limit.

In addition to reporting a local model ${w}_{k}^{t}$, a trained local gradient ${g}_{k}^{t}$ may also be reported. The central node averages local gradients, and updates the global model according to a direction of the averaged gradient.

It can be learned that, in the FL framework, a dataset exists on a distributed node, that is, the distributed node collects a local dataset, performs local training, and reports a local result (a model or a gradient) obtained through training to the central node. The central node does not have a dataset, is only responsible for fusing training results of distributed nodes to obtain a global model, and delivers the global model to the distributed nodes.

### 3. Decentralized learning Different from the federated learning, another distributed learning architecture is decentralized learning.

As shown in FIG. 2g, a fully distributed system without a central node is considered. A design objective *f*(*x*) of a decentralized learning system is usually an average value of objectives *fᵢ*(*x*) of all nodes, that is, $f \left(x\right) = \frac{1}{n} {\sum }_{i = 1}^{n} {f}_{i} \left(x\right)$. Herein, *n* is a quantity of distributed nodes, and *x* is a to-be-optimized parameter. In machine learning, *x* is a parameter of a machine learning (for example, a neural network) model. Each node calculates a local gradient ∇*fᵢ*(*x*) by using local data and a local objective *fᵢ*(*x*), and then sends the local gradient to a communication-reachable neighboring node. After receiving gradient information sent by an adjacent node, any node may update a parameter *x* of the local model according to the following formula: ${x}_{i}^{k + 1} = {x}_{i}^{k} - {α}_{k} \left(\frac{1}{\left|{N}_{i}\right|}{\sum }_{j ∈ {N}_{i}} ∇ {f}_{j} \left({x}_{j}^{k}\right)\right) .$

Herein, ${x}_{i}^{k + 1}$ represents a parameter of the local model obtained after a (k+1)^{th} (k is a natural number) update at an i^{th} node. ${x}_{i}^{k}$ represents a parameter of the local model obtained after a k^{th} update at the i^{th} node (if k is 0, ${x}_{i}^{k}$ represents a parameter of the local model that has not been updated at the i^{th} node). αₖ represents a tuning coefficient. *Nᵢ* represents a set of neighboring nodes of a node *i*. |*Nᵢ*| represents a quantity of elements in the set of neighboring nodes of the node *i*, that is, a quantity of neighboring nodes of the node *i*. Through information exchange between nodes, the decentralized learning system finally learns a unified model.

The technical solutions provided in this application may be applied to a wireless communication system (for example, the system shown in FIG. 1a or FIG. 1b). In the wireless communication system, a communication node usually has a signal receiving and sending capability and a computing capability. A network device having a computing capability is used as an example. The computing capability of the network device is mainly to provide computational power support for a signal receiving and sending capability (for example, performing sending processing and receiving processing on a signal), to implement a communication task between the network device and another communication node.

In a communication network, in addition to providing computational power support for the foregoing communication task by using the computing capability of the communication node, the communication node may further have a surplus computing capability. Therefore, how to use these computing capabilities is an urgent technical problem to be resolved.

In a possible implementation, the communication node may be used as a participating node of the AI learning system, and computational power of the communication node is applied to a specific stage of the AI learning system. With the advent of an era of large models, deep learning models with massive parameters, such as bidirectional encoder representations from transformers (bidirectional encoder representations from transformers, BERT) and generative pre-trained transformers (generative pre-trained transformer, GPT), can complete increasingly complex tasks and achieve better performance. However, for the large model, even an inference process of the model is limited by device capacity. Therefore, the large model is usually stored on a cloud center server. In addition, each device in a network generates a massive amount of raw data every day, and the data requires frequent invocation of the large model for inference. Usually, a device (for example, a communication node) may send data to a central server, the central server performs inference by using the data, and then the central server returns an inference result to the device. This process consumes a large quantity of communication resources for data transmission, and privacy of device data is at risk.

To better reduce communication overheads and protect user data privacy, in a possible implementation, a distributed inference technology of a deep neural network is used, specifically including distributing a model to a device and performing inference on the model by using local computational power of the device, to reduce communication overheads and obtain data privacy protection. However, in a communication system, there is currently no related solution to how to determine (for example, how to generate and update) an AI model used by a communication node.

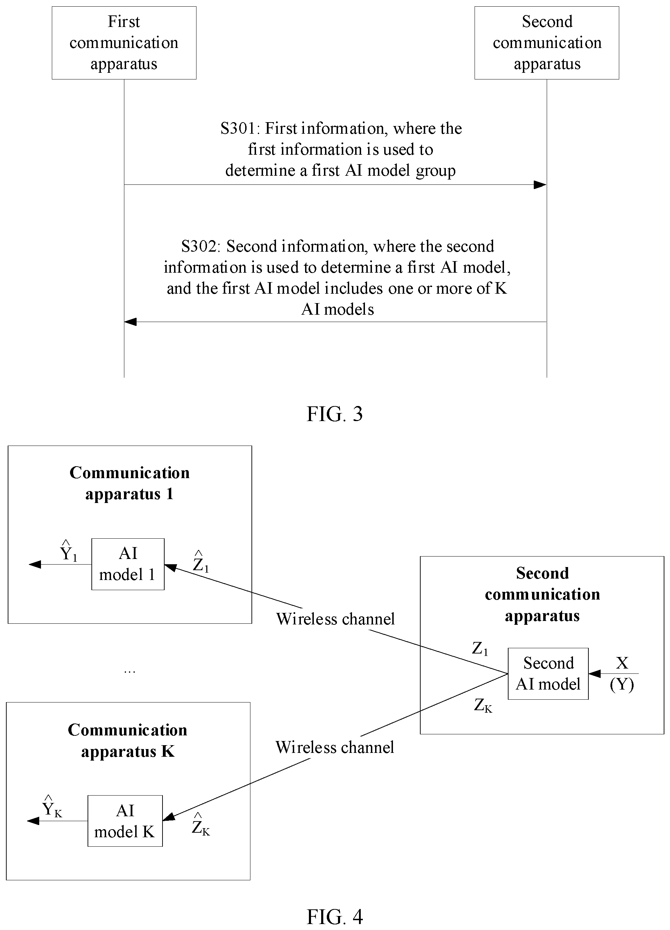

FIG. 3 is a diagram of an implementation of a communication method according to this application. The method includes the following steps.

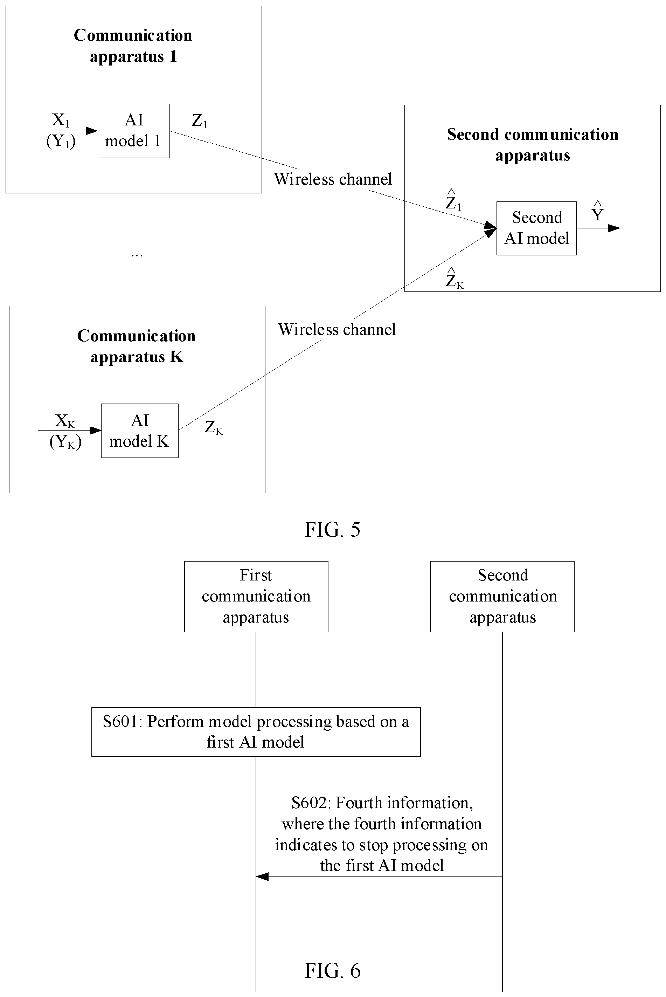

It should be noted that in FIG. 3 (and/or FIG. 6 below), an example in which a first communication apparatus and a second communication apparatus are used as execution bodies of an interaction diagram is used to illustrate the method. However, the execution bodies of the interaction diagram are not limited in this application. For example, in FIG. 3 (and/or FIG. 6 below), the execution bodies of the method may alternatively be chips, chip systems, processors, logic modules, software, or the like in the communication apparatuses. In FIG. 3 (and/or FIG. 6 below), the first communication apparatus may be a network device, and the second communication apparatus may be a terminal device. Alternatively, both the first communication apparatus and the second communication apparatus are terminal devices (for example, the method may be applied to communication processes of different terminal devices in a sidelink communication scenario).

S301: The first communication apparatus sends first information, and correspondingly, the second communication apparatus receives the first information. The first information is used to determine a first AI model group, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are configured to be deployed on M communication apparatuses, the M communication apparatuses include the first communication apparatus, and M is less than or equal to K.

S302: The second communication apparatus sends second information, and correspondingly, the first communication apparatus receives the second information. The second information is used to determine a first AI model, and the first AI model includes one or more of the K AI models.

In this application, terms such as an AI model, a neural network model, an AI neural network model, a machine learning model, and an AI processing model may be replaced with each other.

It should be understood that the first information sent by the first communication apparatus in step S301 is used to determine the first AI model group. That the first AI model group includes the K AI models and the second AI model may be understood as that a function of the first AI model group is implemented by using at least model processing of the K AI models and model processing of the second AI model. In other words, after the first communication apparatus receives the second information, the first communication apparatus may determine the first AI model by using the second information, and perform model processing on the first AI model. Correspondingly, the second communication apparatus may perform model processing on the second AI model deployed on the second communication apparatus. Optionally, the model processing may include one or more of model update processing, model training processing, and model inference processing.

It should be understood that a wireless communication signal (for example, receiving and sending of configuration information of a communication resource, and receiving and sending of a reference signal) may be transmitted between different communication apparatuses (for example, the first communication apparatus and the second communication apparatus).

Optionally, an AI model (for example, the first AI model or the second AI model) in this application may be used to perform management (including at least one of configuration, update, and optimization) on the wireless communication signal. For example, the AI model may include one or more of the following: an AI model used for modulation and/or demodulation, an AI model used for channel prediction, an AI model used for beam management, an AI model used for positioning assistance, an AI model used for channel compression, an AI model used for resource scheduling, or an AI model used to replace one or more modules in a transmitter and/or a receiver. Alternatively, the AI model in this application may be an AI model used for another AI task, for example, an AI model used for image recognition, an AI model used for natural language processing, or an AI model used for computer vision.

Optionally, when the first AI model group is considered as an AI model, the K AI models and the second AI model may be understood as different AI submodels in the AI model.

It should be understood that one AI model is deployed on one communication apparatus (for example, the first AI model is deployed on the first communication apparatus, and the second AI model is deployed on the second communication apparatus), which may be expressed as that one AI model is configured to be deployed on one communication apparatus. In other words, after obtaining a model parameter of one AI model, one communication apparatus may obtain/generate/construct the AI model based on the model parameter of the AI model. Subsequently, the communication apparatus may perform model processing on the AI model. Optionally, the model parameter may include one or more of a hyperparameter of the model, a dataset of the model (including input data of the model and label data corresponding to the input data), and a structure parameter of the model.

In a possible implementation, the second communication apparatus is a functional entity that determines an AI model group list based on the first information, the AI model group list includes one or more AI model groups, and the one or more AI model groups include the first AI model group. Specifically, the second communication apparatus may communicate with one or more first communication apparatuses, and the second communication apparatus may receive information (for example, one or more pieces of first information) from the one or more first communication apparatuses, to generate/obtain/determine one or more AI model groups. In other words, the second communication apparatus may collect information and generate a model based on the collected information. Subsequently, the second communication apparatus may deploy the AI model on the one or more first communication apparatuses.

Optionally, the AI model group list may include one or more AI model groups, and each AI model group may include two or more AI models. As described above, a relationship between the AI model group and the AI model may also be understood as a relationship between the AI model and the AI submodel. Therefore, the AI model group list may alternatively be replaced with an AI model list. That is, the AI model list may include one or more AI models.

Optionally, the list may be replaced with another term, such as a set, a dictionary, a combination, space, or the like.

Optionally, that the second communication apparatus is a functional entity that determines the AI model group list based on the first information includes: The second communication apparatus is a functional entity that determines the AI model group list based on the first information, and selects, from the AI model group list, some or all AI model groups used by the first communication apparatus. Specifically, after the second communication apparatus determines the AI model group list based on the first information, a function implemented by the second communication apparatus may further include selecting, from the AI model group list, some or all AI model groups used by the first communication apparatus. In other words, in addition to collecting information and generating a model based on the collected information, the second communication apparatus may further perform model selection, so that the second communication apparatus may subsequently deploy, on the one or more first communication apparatuses, an AI model that adapts to the one or more first communication apparatuses.

It should be understood that the K AI models are configured to be deployed on the M communication apparatuses, and M is less than or equal to K. When values of M and K are different, the K AI models may be implemented in different manners, which are described respectively below.

For example, when M is equal to K, different AI models in the K AI models may be deployed on different communication apparatuses in the M communication apparatuses. In other words, the K AI models may be in a one-to-one correspondence with the M communication apparatuses. In other words, an i^{th} AI model in the K AI models may be configured to be deployed on an i^{th} communication apparatus in the M communication apparatuses (a value of i is 1 to K or 1 to M). For example, the first AI model configured to be deployed on the first communication apparatus may include one of the K AI models.

For another example, when M is less than K, at least two AI models in the K AI models may be deployed on one of the M communication apparatuses. That is, the K AI models may not be in a one-to-one correspondence with the M communication apparatuses. For example, the first AI model configured to be deployed on the first communication apparatus may include at least two AI models in the K AI models.

Optionally, the M communication apparatuses configured to deploy the K AI models may be referred to as a collaboration set of the second communication apparatus, a collaboration set of the first AI model group, or a collaboration set of the second AI model.

For ease of understanding, the following uses a case in which M is equal to K and K is greater than 1 (that is, the M communication apparatuses may be described as K communication apparatuses) as an example to describe AI models deployed on the K communication apparatuses and the second communication apparatus.

For example, as shown in FIG. 4, the K communication apparatuses may be a communication apparatus 1, ..., and a communication apparatus K in the figure, and the K AI models may be an AI model 1, ..., and an AI model K in the figure. It should be understood that the first communication apparatus may be one of the K communication apparatuses, and the first AI model configured to be deployed on the first communication apparatus may be one of the K AI models. In FIG. 4, an input to the K AI models deployed on the K communication apparatuses includes an output of the second AI model. For example, input data of the second AI model is X. After processing by the second AI model, the second communication apparatus may obtain and separately send data *Z*₁, ..., and Z_{K} to the K communication apparatuses. Data received by the K communication apparatuses through transmission on a wireless channel is respectively represented as $\hat{{Z}_{1}}$, ..., and $\hat{{Z}_{K}}$ (it may be understood that due to interference such as transmission path loss and noise over the wireless channel, $\hat{{Z}_{1}}$ and Z₁ may not be the same, ..., and $\hat{{Z}_{K}}$ and Z_{K} may not be the same. However, data dimensions of $\hat{{Z}_{1}}$ and Z₁ are generally the same, ..., and data dimensions of $\hat{{Z}_{K}}$ and Z_{K} are generally the same. Herein, $\hat{{Z}_{1}}$ may be understood as an estimate of Z₁ or a measured value of Z₁, ..., and $\hat{{Z}_{K}}$ may be understood as an estimate of Z_{K} or a measured value of Z_{K}, and so on). Then, the K communication apparatuses may use respectively received data as inputs to the AI models, and obtain data $\hat{{Y}_{1}} , … , \hat{{Y}_{K}}$ after processing by the AI models. That is, the communication apparatus 1 may obtain $\hat{{Y}_{1}}$, ..., and the communication apparatus K may obtain $\hat{{Y}_{K}}$.

Optionally, in the example shown in FIG. 4, among the data Z₁, ..., and Z_{K} separately sent by the second AI model to the K communication apparatuses, the K pieces of data may be partially the same or completely the same, or may be different from each other.

For example, as shown in FIG. 5, the K communication apparatuses may be a communication apparatus 1, ..., and a communication apparatus K in the figure, and the K AI models may be an AI model 1, ..., and an AI model K in the figure. It should be understood that the first communication apparatus may be one of the K communication apparatuses, and the first AI model configured to be deployed on the first communication apparatus may be one of the K AI models. In FIG. 5, an input to the second AI model includes outputs of the K AI models deployed on the K communication apparatuses. For example, inputs to the K AI models may be respectively represented as X₁, ..., and X_{K}, and after processing by the K AI models, Z₁, ..., and Z_{K} may be obtained. Data received by the second communication apparatus through transmission on a wireless channel is represented as $\hat{{Z}_{1}}$, ..., and $\hat{{Z}_{K}}$ (it may be understood that due to interference such as transmission path loss and noise over the wireless channel, $\hat{{Z}_{1}}$ and Z₁ may not be the same, ..., and $\hat{{Z}_{K}}$ and Z_{K} may not be the same. However, data dimensions of $\hat{{Z}_{1}}$ and Z₁ are generally the same, ..., and data dimensions of $\hat{{Z}_{K}}$ and Z_{K} are generally the same. Herein, $\hat{{Z}_{1}}$ may be understood as an estimate of Z₁ or a measured value of Z₁, ..., and $\hat{{Z}_{K}}$ may be understood as an estimate of Z_{K} or a measured value of Z_{K}, and so on). Then, the second communication apparatus may perform AI model processing one or more times based on the received K pieces of data (that is, $\hat{{Z}_{1}}$, ..., and $\hat{{Z}_{K}}$) and the second AI model. AI model processing for each time may include one or more of the K pieces of data. In addition, a processing result obtained after AI model processing for one or more times may be represented as Ŷ.

It may be understood that the first communication apparatus and the second communication apparatus may have a plurality of implementations.

For example, any one of the M communication apparatuses is a terminal device, and the second communication apparatus may be a terminal device. Correspondingly, the first communication apparatus and the second communication apparatus may communicate over a sidelink (sidelink, SL). In this case, the K AI models and the second AI model may be referred to as an end-to-end model, an end-to-end collaborative model, or the like. For example, the end-to-end collaborative model is used as an example. When K is equal to 1, the end-to-end collaborative model may be referred to as a single-link end-to-end collaborative model. When K is greater than 1, the end-to-end collaborative model may be referred to as a multi-link end-to-end collaborative model.

For another example, any one of the M communication apparatuses is a terminal device, and the second communication apparatus may be a network device (for example, an access network device). Correspondingly, the first communication apparatus and the second communication apparatus may communicate over uplink and downlink communication links. In this case, the K AI models and the second AI model may be referred to as edge-to-end models, edge-to-end collaborative models, end-to-edge models, end-to-edge collaborative models, or the like. For example, the end-to-edge collaborative model is used as an example. When K is equal to 1, the end-to-edge collaborative model may be referred to as a single-link end-to-edge collaborative model. When K is greater than 1, the end-to-edge collaborative model may be referred to as a multi-link end-to-edge collaborative model.

It should be noted that, in FIG. 4 and FIG. 5, data Y, Y₁, ..., and Y_{K} may respectively be input data X, X₁, ..., and X_{K} corresponding label data of the model, and an association relationship between the label data and a processing result (for example, Ŷ, $\hat{{Y}_{1}}$, ..., or $\hat{{Y}_{K}}$) of an AI model may be used to detect or determine processing performance of the K AI models and the second AI model. For example, the association relationship may be determined by using gradient information, a loss function, or the like.

Optionally, for the K AI models, the label data Y₁, ..., and Y_{K} of the K AI models may be the same, or may be different. This is not limited herein.

It may be learned from the implementation process shown in FIG. 3 that, for the second communication apparatus, after receiving the first information in step S301, the second communication apparatus may generate (or determine) a model based on the first information, to obtain the first AI model group. The following describes an example of a process in which the second communication apparatus determines the first AI model group based on the first information.

First, a theoretical basis for generating an AI model is described by using an implementation process of the following manner A.

Usually, in a network oriented to a conventional connection or session, a design objective between different communication devices (that is, transceivers) is to enable a receiver to accurately and correctly reply to all data sent by a transmitter, that is, to pursue lossless data transmission. However, in a future-oriented intelligent network, because of existence of massive data and different purposes of different AI tasks, it may no longer be necessary to transmit all data. Instead, only data that is valuable for the AI task may need to be transmitted. Therefore, the network may achieve optimization of AI model performance (for example, maximize an accuracy of the AI model) by transmitting a minimum amount of wireless data.

To achieve this objective, in the examples shown in FIG. 4 and FIG. 5, performance of the AI model may be represented based on mutual information between different data. In an implementation example, the following uses the scenario shown in FIG. 5 as an example to describe implementation of the mutual information. It should be understood that in the scenario shown in FIG. 4, reverse transmission may be implemented with reference to the following example.

In FIG. 5, input data of a k^{th} (a value of k is any one of 1 to K) AI model in the K AI models may be represented as Xₖ, and label data Yₖ corresponding to the input data Xₖ and data $\hat{{Z}_{k}}$ received by the second communication apparatus meet Manner A: ${L}_{IB} = - I \left(Y; {\hat{Z}}_{1 : K}\right) + {\sum }_{k = 1}^{K} {β}_{k} I \left({\hat{Z}}_{k}; {X}_{k}\right) .$

Herein, I(a; b) represents an amount of mutual information between a variable a and a variable b.

Ẑ_{1:K} represents a set of $\hat{{Z}_{1}}$, ..., and $\hat{{Z}_{k}}$.

I(Y; Ẑ_{1:K}) represents mutual information between data Ẑ_{1:K} transmitted over a wireless channel and label data Y (label data Y may be understood as a correct result/an expected result of an AI task). A larger value of the mutual information indicates more information about the label data Y included in the data Ẑ_{1:K} transmitted over the wireless channel, and may be understood as a higher accuracy of the AI model, that is, better model performance of the AI model.

I(Ẑₖ; Xₖ) represents an amount of mutual information between original input data Xₖ and radio link data Ẑₖ. A smaller amount of mutual information indicates a smaller amount of data transmitted over a radio link, that is, lower radio communication overheads. Correspondingly, ${\sum }_{k = 1}^{K} I \left({\hat{Z}}_{k}; {X}_{k}\right)$ represents a sum of data transmitted over K radio links. A smaller value of ${\sum }_{k = 1}^{K} I \left({\hat{Z}}_{k}; {X}_{k}\right)$ indicates lower total wireless communication overheads of the K radio links.

βₖ (for example, a value range of βₖ may be [0, 1]) may control a ratio between two pieces of mutual information, to balance an accuracy of an AI processing result on a k^{th} link and wireless communication overheads. βₖ corresponding to different communication apparatuses may be the same or may be different.

Therefore, minimizing the formula 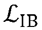 indicates that correctness of the processing result of the AI model is maximized while ensuring that wireless communication overheads are as low as possible. A subscript "IB" of 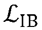 represents an information bottleneck (information bottleneck, IB) theory (or a theory such as a distributed information bottleneck (distributed information bottleneck), a deterministic information bottleneck (deterministic information bottleneck), or another information theory). In other words, 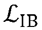 may be replaced with another symbol, and is merely an implementation example herein.

For example, based on implementation of Manner A, in an AI model generation process, a generation basis of the model may include one or more of the following data A to data C. To be specific, an AI model group may be generated based on the following data A to data C (for example, the second communication apparatus may generate the first AI model group). The following provides exemplary descriptions of the data A to the data C. Data A is M pairs of data and labels ${\left\{\left({x}_{m , 1}, {y}_{m , 1}\right),…,\left({x}_{m , K}, {y}_{m , K}\right)\right\}}_{m = 1}^{M}$, which are used as input data (where M is a size (batch size) for batch processing data, x_{m,k} represents input data of an m^{th} pair of data, and y_{m,k} represents label data of the m^{th} pair of data).

Optionally, different label data may be the same, that is, y_{m,1}, ..., and y_{m,K} may all be represented as yₘ. In other words, inputs (that is, x_{m,1}, ..., and x_{m,K}) of multi-link data may be used for collaborative inference of a same result yₘ , that is, the foregoing data A may be represented as ${\left\{\left({x}_{m , 1}, ⋯, {x}_{m , k}, {y}_{m}\right)\right\}}_{m = 1}^{M}$.

Optionally, the quantity "M" of the M pairs of data and labels used as the input data is defined differently from the quantity "M" of the foregoing M communication apparatuses. Herein, only a same letter is used to represent a quantity, and the two values may be the same or may be different.

Data B is a dimension of data transmitted over a radio link (for example, a dimension of Ẑₖ or Zₖ in FIG. 5). For example, the dimension of the data may be represented as a quantity of tokens/words/labels (tokens) (which are uniformly represented as tokens in the following), or the dimension of the data may be represented as a dimension of an embedding (embedding) vector. It may be understood that a token is a concept similar to a word, and may be understood as a basic unit for partitioning an intermediate transmission amount, while embedding is vector representation of the intermediate transmission amount. The token may be understood as each constituent unit within an embedding vector, that is, a quantity of constituent units in the embedding may be a dimension of the token.

Data C is channel state information (for example, white Gaussian noise modeling).

Optionally, a process in which one AI model group may be generated based on one or more of the data A to the data C may be implemented by using a neural network. In other words, input data to the neural network includes one or more of the data A to the data C, and a model parameter of an AI model group (the AI model group includes the K AI models and the second AI model) is obtained through processing of the neural network.

In an implementation example, a loss function of the neural network may be represented as Manner B: $min {L}_{IB} = - I \left(Y; {\hat{Z}}_{1 : K}\right) + {\sum }_{k = 1}^{K} {β}_{k} I \left({\hat{Z}}_{k}; {X}_{k}\right) .$

In another implementation example, to reduce complexity of solving 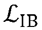 , variational methods may be introduced to process computation of an amount of mutual information. For example, a loss function of the neural network may be represented as C: ${L}_{VDIB} \left(ψ, {θ}_{k}\right) = {E}_{{p}_{ψ} \left(\left.y\right|{\hat{z}}_{1 : K}\right)} \left\{-log {p}_{ψ}\left(\left.y\right|{\hat{z}}_{1 : K}\right)\right\} + {\sum }_{k = 1}^{K} {β}_{k} {E}_{p \left({x}_{k}, y\right)} \left\{{D}_{KL}\left({p}_{{θ}_{k}}\left(\left.{\hat{z}}_{k}\right|{x}_{k}\right)\left‖{r}_{k}\left({\hat{z}}_{k}\right)\right.\right)\right\} .$

A subscript "VDIB" of 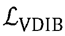 represents a distributed information bottleneck (variational distributed information bottleneck, VDIB).

K represents a quantity of user equipments/a quantity of links in a multi-link scenario.

*θₖ* represents a neural network or model parameter deployed by a user k (for example, the first communication apparatus).

*ψ* represents a neural network or model parameter deployed by a base station side (for example, the second communication apparatus).

βₖ represents a Lagrange multiplier, used to balance an accuracy of an AI processing result on a k^{th} link and wireless communication overheads.

p_{θk}(ẑₖ|xₖ) represents a conditional probability density of ẑₖ, given input data xₖ, based on a neural network with a parameter of θₖ on a side of the user k.

p_{ψ}(y|ẑ_{1:K}): On a base station side, based on a neural network with a parameter ϕ, given a receive vector ẑ_{1:K}, cross entropy between an inference variable ŷ and a target variable y is obtained.

rₖ(ẑₖ) represents a distribution that approximates zₖ by using a variational distribution rₖ(ẑₖ).${E}_{p \left({x}_{k}, y\right)} \left\{⋅\right\}$ represents taking an expectation/average value in {·} on the premise that a probability density function p(xₖ, y) is known.${E}_{{p}_{ψ} \left(\left.y\right|{\hat{z}}_{1 : K}\right)} \left\{⋅\right\}$ represents taking an expectation/average value in {·} on the premise that a probability density function pψ(y|ẑ_{1:K}) is known.

p_{ψ}(y|ẑ_{1:K}) represents a conditional probability distribution with a parameter ϕ.

q(*ẑ*) represents a variational distribution form to approximate a probability distribution p(ẑ).

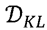 (p_{θₖ}(ẑₖ|xₖ)∥rₖ(ẑₖ)) represents a Kullback-Leibler (Kullback-Leibler, KL) divergence between a probability distribution p_{θₖ}(ẑₖ|xₖ) and a probability distribution rₖ(ẑₖ).

In another implementation example, on the premise that a token/embedding dimension is constrained by a radio link bandwidth, a loss function of the neural network may be expressed as Manner D: $max I \left(Y; {\hat{Z}}_{1 : K}\right) , s . t . I \left({\hat{Z}}_{k}; {X}_{k}\right) \leq Th {1}_{k} , k = 1 , 2 , … , K .$

Herein, s. t. 1(Ẑₖ; Xₖ) ≤ *Th*1*ₖ* specifies a constraint condition I(Ẑₖ; Xₖ) ≤ *Th*1*ₖ . Th*1*ₖ* represents a maximum bandwidth threshold of a k^{th} radio link. A physical meaning of the constraint condition I(Ẑₖ; Xₖ) ≤ *Th*1*ₖ* is that an amount of data transmitted over the radio link meets an air-interface bandwidth constraint. In other words, in Manner D, an accuracy of an AI task can be maximized on the premise that information transmitted over a wireless channel meets a bandwidth constraint.

In another implementation example, on the premise that a token/embedding dimension is constrained by a radio link bandwidth, a loss function of the neural network may be expressed as Manner E: $min {\sum }_{k = 1}^{{K}^{˜}} {β}_{k} I \left({\hat{Z}}_{k}; {X}_{k}\right) , s . t . I \left(Y; {\hat{Z}}_{1 : K}\right) \geq Th 2 , {K}^{˜} ∈ \left\{1,2,…,K\right\} .$

Herein, s. t. I(Y; Ẑ_{1:K}) ≥ Th2 specifies a constraint condition I(Y; Ẑ_{1:K}) ≥ Th2 . Th2 represents a minimum accuracy threshold of an AI task. A physical meaning of the constraint condition I(Y; Ẑ_{1:K}) ≥ Th2 is that an accuracy of the AI task is greater than the minimum threshold. In other words, in Manner E, an amount of information transmitted over a wireless channel can be minimized on the premise that the accuracy of the AI task is greater than the minimum threshold.

Based on the foregoing implementation process, the obtained inference accuracy of the AI model is high on the premise that the token/embedding dimension is constrained by bandwidth. For example, based on different datasets, simulation results obtained by using Manner C are as follows:

Canadian Institute for Advanced Research (canadian institute for advanced research, CIFAR) dataset test: a quantity of K communication apparatuses (the number of devices)=4, a quantity of training epochs (epoch)=320, an intermediate output dimension (intermediate dim)=64, and an accuracy (accuracy)=87.44%.

Modified National Institute of Standards and Technology database (modified national institute of standards and technology database, MNIST) dataset test: the number of devices=4, number of epoch=320, intermediate dim=64, and accuracy=98.44%.

The intermediate output dimension is a dimension of Ẑₖ or Zₖ as described above, and the accuracy is an accuracy of the AI task.

Optionally, that the K communication apparatuses are K terminals and the second communication apparatus is a base station is used as an example. A model generation process in any one of Manner A to Manner E may be summarized as the following steps.

Step 1: Based on a reparameterization technique and Monte Carlo sampling, an unbiased estimate of a VDIB gradient can be obtained, and an objective function can be optimized using stochastic gradient descent. A small batch of data is given, and each group of data is randomly sampled, so that an empirical estimate of the VDIB can be obtained, which meets Manner F: ${L}_{VDIB *} ≅ \frac{1}{M} {\sum }_{m = 1}^{M} \frac{1}{L} {\sum }_{l = 1}^{L} \left\{-log {p}_{ψ}\left(\left.{y}_{m}\right|{\hat{z}}_{m , 1 : K}^{l}\right)+β{\sum }_{k = 1}^{K} {D}_{KL} \left({p}_{{θ}_{i}}\left(\left.{\hat{z}}_{i}\right|{x}_{m , i}\right)\left‖r\left({\hat{z}}_{i}\right)\right.\right)\right\} .$

In comparison with Manner C, meanings of new parameters in Manner F are as follows:

M represents a batch size, that is, a size/amount of input data during each training.

L represents a quantity of times a wireless channel environment is sampled during each training.

*yₘ* represents a target vector of an m^{th} group of data.${\hat{z}}_{m , 1 : K}^{l}$ represents data received at a base station side for the m^{th} group of data under an l^{th} channel sampling.

Step 2: Based on Manner F (that is, a Lagrangian expression of the VDIB), a model parameter ψ at the base station side is updated, and a gradient parameter ${\left\{{ϕ}_{k}\right\}}_{k = 1}^{K}$ is back-propagated to a terminal side, to support a model update at the terminal side.

Step 3: The terminal updates a local model parameter ${\left\{{θ}_{k}\right\}}_{k = 1}^{K}$ based on the gradient parameter ${\left\{{ϕ}_{k}\right\}}_{k = 1}^{K}$ back-propagated from the base station.

After a plurality of iterations of the foregoing three steps, an optimal deep neural network parameter Device DNN ${\left\{{θ}_{k}^{*}\right\}}_{k = 1}^{K}$ for the K terminals, an optimal deep neural network parameter BS DNN ψ* on the base station side, and an optimal token dimension ${N}_{i}^{∗}$ of a radio link corresponding to a highest task accuracy may be obtained.

The following describes in detail how to implement gradient backpropagation in a model training process. In a model training process, through calculation of a gradient of an objective function 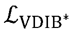 , the base station side updates ψ, and the terminal side separately update θₖ, k = 1, ..., K. A specific process is as follows:

First, the base station side calculates a gradient of a local model parameter ψ according to Manner G below, and updates a local neural network parameter, and Manner G meets: $\frac{\partial {L}_{{VDIB}^{∗}}}{\partial ψ} = \frac{\partial {L}_{{VDIB}^{∗}}}{\partial \hat{y}} \frac{\partial \hat{y}}{\partial ψ} .$

Second, the gradient parameter ϕₖ, k = 1, ..., K provided for the terminal side is calculated on the base station side, which meets Manner H: ${ϕ}_{k} = \frac{\partial {L}_{{VDIB}^{∗}}}{\partial \hat{y}} \frac{\partial \hat{y}}{\partial ψ} \frac{\partial ψ}{\partial {\hat{z}}_{k}} = \frac{\partial {L}_{{VDIB}^{∗}}}{\partial ψ} \frac{\partial ψ}{\partial {\hat{z}}_{k}} .$

ϕₖ, k = 1, ... , K is separately transmitted to a k ^{th} terminal. Therefore, a back-propagated parameter is ${\left\{{ϕ}_{k}\right\}}_{k = 1}^{K}$.

Finally, the k^{th} terminal obtains a gradient of the local model based on the received gradient parameter ϕₖ according to Manner I below, and subsequently updates a local neural network parameter θ_{K}. Manner I meets: $\frac{\partial {L}_{{VDIB}^{∗}}}{\partial {θ}_{k}} = \frac{\partial {L}_{{VDIB}^{∗}}}{\partial \hat{y}} \frac{\partial \hat{y}}{\partial ψ} \frac{\partial ψ}{\partial {\hat{z}}_{k}} \frac{\partial {\hat{z}}_{k}}{\partial {z}_{k}} \frac{\partial {z}_{k}}{\partial {θ}_{k}} = {ϕ}_{k} \frac{\partial {\hat{z}}_{k}}{\partial {z}_{k}} \frac{\partial {z}_{k}}{\partial {θ}_{k}} .$

In the foregoing implementation, related parameters are as follows:
1. The input information includes:
   a quantity K of links (or terminals) participating in collaboration;
   a quantity T of iterations (or number of epochs);
   channel state information of each link: channel noise power ${σ}_{k}^{2}$ and a quantity L of channel sampling times; and
   a quantity of samples for model training: a batch size (batch size), which indicates a quantity of samples in a group of samples input to a model at a time during training.
2. The output information includes:
   an optimal deep neural network parameter Device DNN ${\left\{{ϕ}_{k}^{*}\right\}}_{k = 1}^{K}$ for the K terminals;
   an optimal deep neural network parameter BS DNN ψ∗ on the base station side; and
   a task completion accuracy (Accuracy) corresponding to each token dimension N.

An accuracy (Accuracy) corresponding to each value of N can be obtained by traversing N. Therefore, an optimal token dimension ${\left\{{N}_{k}^{*}\right\}}_{k = 1}^{K}$ for a radio link corresponding to a maximum task accuracy can be output.

### 3. Key interaction amount during a model training process:

For any given initial model, after one round of iteration (including T epochs), final model parameters on the base station side and the terminal side are obtained. Intermediate interaction information mainly includes a back-propagated gradient parameter ${\left\{{ϕ}_{k}\right\}}_{k = 1}^{K}$. That is, the back-propagated parameter in each interaction may meet Manner H.

In a possible implementation, the second information sent by the second communication apparatus in step S302 includes at least one of the following: a model parameter of the first AI model, a model parameter of the first AI model group, dimension information of input data of the first AI model, and dimension information of output data of the first AI model. In other words, the second communication apparatus may deploy the first AI model on the first communication apparatus by using at least one of the foregoing, to improve flexibility of implementing the solution.

It may be understood that when the second information includes the model parameter of the first AI model and/or the model parameter of the first AI model group, the first communication apparatus may locally construct/generate the first AI model based on the model parameter included in the second information, and obtain the first AI model in this manner.

It may be understood that when the second information includes the dimension information of the input data of the first AI model and/or the dimension information of the output data of the first AI model, the first communication apparatus may update an initial model based on the dimension information of the input data and/or the dimension information of the output data, to obtain the first AI model. Optionally, the initial model may be a model pre-configured on the first communication apparatus, or may be a model (for example, a third AI model described below) configured by the second communication apparatus. This is not limited herein.

In addition, when the second information includes the dimension information of the input data of the first AI model and/or the dimension information of the output data of the first AI model, the second information may be implemented in a plurality of manners. For example, the second information may include a specific value of the dimension information, and the second information may alternatively include an index value of the dimension information.

For ease of understanding, the following uses an implementation process in which the second information includes the index value of the dimension information as an example for description.

In a possible implementation, before the first communication apparatus receives the second information, the method further includes: The first communication apparatus receives third information. The third information is used to configure a mapping relationship between P pieces of dimension information and Q indexes, both P and Q are positive integers, the second information includes one or more indexes of the Q indexes, and the one or more indexes are used to determine one piece of dimension information in the P pieces of dimension information. In other words, the first communication apparatus may receive the third information used to configure the mapping relationship between the P pieces of dimension information and the Q indexes. Then, the second information received by the first communication apparatus in step S302 may include one or more indexes of the Q indexes. In addition, the first communication apparatus may determine one piece of dimension information in the P pieces of dimension information based on the one or more indexes. Therefore, in an implementation in which the mapping relationship is configured by using the third information, the second information sent by the second communication apparatus may indicate the dimension information by carrying an index, so that indication overheads can be reduced.

In this application, the index may be replaced with another term, for example, a representation or a number.

Optionally, the third information is layer-3 (layer-3, L3) signaling, and the second information is layer-1 (layer-1, L1) and/or layer-2 (layer-2, L2) signaling. For example, the L3 signaling may include NAS signaling and/or RRC layer signaling. For another example, the L1 signaling may be understood as physical layer signaling. For another example, the L2 signaling may be understood as radio network layer signaling, including at least one of MAC layer signaling, RLC signaling, PDCP signaling, and SDAP layer signaling.

Optionally, the mapping relationship configured by using the third information may be implemented by using a table, a formula, or the like. The following describes an example of an implementation process in which the mapping relationship of the third information is configured by using a table.

Table 2 shows an implementation example in which the mapping relationship of the third information is configured by using a table.

**Table 2**

| Index | Dimension value |
|---|---|
| 1 | 2 |
| 2 | 4 |
| 3 | 8 |
| 4 | 16 |
| 5 | 32 |
| ... | ... |

In Table 2, the P pieces of dimension information and the Q indexes may be in a one-to-one correspondence, that is, values of P and Q may be equal.

For example, in the example shown in Table 2, when the dimension value indicated by the second communication apparatus is "8", the second information sent by the second communication apparatus in step S302 may include an index value "3". When the dimension value indicated by the second communication apparatus is "32", the second information sent by the second communication apparatus in step S302 may include an index value "5". It may be learned that when the dimension value is large, indication overheads can be reduced by using a manner in which the second information includes the index value.

Optionally, in the example shown in Table 2, when the dimension value indicated by the second communication apparatus does not appear in the table, the second communication apparatus may perform implementation in a manner of rounding up, rounding down, or delivering a plurality of index values. For example, when the dimension value indicated by the second communication apparatus is "6", in the rounding-up manner, the second information sent by the second communication apparatus in step S302 may include an index value "3", that is, indicates that the dimension value is "8". In the rounding-down manner, the second information sent by the second communication apparatus in step S302 may include an index value "2", that is, indicates that the dimension value is "8". In the manner of delivering a plurality of index values, the second information sent by the second communication apparatus in step S302 may include index values "1" and "2", that is, indicates that the dimension value is "2+4=6". Alternatively, the second information sent by the second communication apparatus in step S302 may include index values "3" and "1", that is, indicate that the dimension value is "8-1=6".

Optionally, in the example shown in Table 2, different dimension values may be represented by using formulas. For example, the dimension value N meets: $N = {2}^{I} .$

Herein, I indicates an index.

Table 3 shows an implementation example in which the mapping relationship of the third information is configured by using a table.

**Table 3**

| Index | Dimension value |
|---|---|
| 1 | 2 |
| | 4 |
| 2 | 8 |
| | 16 |
| 3 | 32 |
| ... | ... |

In Table 3, there may be a one-to-many relationship between the P pieces of dimension information and the Q indexes, that is, a value of P is smaller than a value of Q.

For example, in the example shown in Table 3, there are some indexes that may indicate two or more dimension values by using one index value. For example, when the second communication apparatus determines, based on any one of Manner A to Manner E described above, that performance of the dimension value "2" is the same as or similar to that of the dimension value "4", the second information sent by the second communication apparatus in step S302 may include an index value "1", so that the first communication apparatus may locally determine to use one of the dimension value "2" or "4" to determine the first AI model.

Table 4 to Table 6 show other implementation examples in which the mapping relationship of the third information is configured by using a table.

**Table 4**

| Index | AI model category |
|---|---|
| 1 | X |
| 2 | Y |
| ... | ... |

**Table 5**

| Index | Dimension value corresponding to an AI model category X |
|---|---|
| 1 | 2 |
| 2 | 4 |
| 3 | 8 |
| 4 | 16 |
| 5 | 32 |

**Table 6**

| Index | Dimension value corresponding to an AI model category Y |
|---|---|
| 1 | 10 |
| 2 | 20 |
| 3 | 30 |
| 4 | 40 |
| 5 | 50 |
| ... | ... |

In the implementations shown in Table 4 to Table 6, there may be a one-to-many relationship between the P pieces of dimension information and the Q indexes, that is, a value of P is smaller than a value of Q.

For example, in the examples shown in Table 4 to Table 6, the Q indexes included in the second information sent by the second communication apparatus in step S302 may be two indexes. One index indicates an AI model category (denoted as an index 1), and the other index indicates a dimension value (denoted as an index 2) in the AI model category.

For example, when the dimension value corresponding to the AI model category X indicated by the second communication apparatus is "16", the second information sent by the second communication apparatus in step S302 may include index values (1 and 4). That is, a value of the index 1 is 1 and a value of the index 2 is 4. In this manner, the first communication apparatus may determine Table 5 based on the value of the index 1 being 1, and can further determine from Table 5 that "the dimension value corresponding to the AI model category X is 16" based on the value of index 2 being 4.

For another example, when the dimension value corresponding to the AI model category Y indicated by the second communication apparatus is "50", the second information sent by the second communication apparatus in step S302 may include index values (2 and 5). That is, a value of the index 1 is 2 and a value of the index 2 is 5. In this manner, the first communication apparatus may determine Table 6 based on the value of the index 1 being 2, and can further determine from Table 6 that "the dimension value corresponding to the AI model category X is 50" based on the value of index 2 being 5.

Optionally, in any one of the foregoing implementations, the one or more tables configured by using the third information may be delivered by using one message/signaling, or may be delivered by using a plurality of messages/signaling. This is not limited herein.

Optionally, in the examples shown in Table 4 to Table 6, the "AI model category" may be replaced with another implementation, for example, one or more of an AI model identifier, an AI model function identifier, a task category corresponding to the AI model, a data category corresponding to the AI model, an AI model size category, an AI model function category, an AI model form category, and an AI model deployment category.

It may be learned from the foregoing descriptions that the first information sent by the first communication apparatus in step S301 may be used to determine the first AI model group. Based on the parameters in the processes shown in Manner A to Manner E, the first information may include one or more of the following information A to information E. In other words, the second communication apparatus may obtain, by using one or more of information A to information E included in the following first information, parameters required in Manner A to Manner D, and generate the first AI model group according to one of Manner A to Manner E.

Information A is first dimension information. When an input of the first AI model includes an output of the second AI model, the first dimension information is used to determine dimension information of input data of the first AI model or dimension information of output data of the second AI model.

Information B is second dimension information. When an input of the second AI model includes an output of the first AI model, the second dimension information is used to determine dimension information of output data of the first AI model or dimension information of input data of the second AI model.

Information C is the input data of the first AI model and label data of the input data of the first AI model.

Information D is local computational power status information of the first communication apparatus.

Information E is channel state information.

For the information A or the information B, the second communication apparatus may determine, by using the first information, dimension information of data transmitted over a communication link. For example, the dimension information may be a quantity of tokens (tokens) or a dimension of an embedding (embedding) vector. However, when a communication bandwidth between the first communication apparatus and the second communication apparatus is fixed, because a dimension of data transmitted over the communication link is associated with processing performance of the AI model, in this manner, an implementation process in which the second communication apparatus determines the first AI model group can be simplified, complexity of the second communication apparatus is reduced, and processing performance of AI models included in the first AI model group can be improved.

Optionally, the dimension information includes at least one of the following: an upper limit of a dimension, a lower limit of a dimension, a dimension expected by the first communication apparatus (or a dimension not expected by the first communication apparatus), and a value range of the dimension expected by the first communication apparatus (or a value range of the dimension not expected by the first communication apparatus).

For example, when the dimension information includes the upper limit of the dimension and/or the lower limit of the dimension, the second communication apparatus may use a range indicated by the upper limit and/or the lower limit as one of determining bases of the AI model, so that flexibility of implementing the solution can be improved.

For another example, when the dimension information includes the dimension expected by the first communication apparatus and/or the value range of the dimension expected by the first communication apparatus, the AI model determined by the second communication apparatus based on the dimension information can meet an expectation of the first communication apparatus.

Optionally, in the information A or the information B, the first dimension information or the second dimension information is determined based on channel state information (channel state information, CSI). Specifically, the first dimension information or the second dimension information included in the first information may be determined based on the channel state information, so that the first dimension information or the second dimension information can reflect a channel characteristic of a wireless channel between the first communication apparatus and the second communication apparatus to some extent, and an AI model that can be subsequently obtained based on the first information can adapt to the channel characteristic of the wireless channel, to improve transmission performance of AI data corresponding to the AI model. In addition, when the AI model obtained based on the first information can adapt to the channel characteristic of the wireless channel, transmission data of the radio link can also meet a channel bandwidth requirement as much as possible, thereby improving model performance of the AI models included in the first AI model group.

Optionally, the channel state information may include channel information between the first communication apparatus and the second communication apparatus, and/or channel information between the second communication apparatus and the first communication apparatus. When the first communication apparatus is a terminal device and the second communication apparatus is a network device, the channel information between the first communication apparatus and the second communication apparatus may be understood as uplink channel information, and the channel information between the second communication apparatus and the first communication apparatus may be understood as downlink channel information.

Optionally, the channel state information may be obtained based on a reference signal.

For example, when the first communication apparatus communicates with the second communication apparatus by using a sidelink, the reference signal may include a sidelink synchronization signal/physical broadcast channel block (sidelink synchronization signal/physical broadcast channel block, sidelink SSB, SL-SSB, or S-SS/PSBCH block), a sidelink channel state information reference signal (sidelink channel state information reference signal, SL-CSI-RS), and the like.

For another example, when the first communication apparatus communicates with the second communication apparatus through an uplink and a downlink, the reference signal may include a channel state information reference signal (channel state information reference signal, CSI-RS), a sounding reference signal (sounding reference signal, SRS), and the like.

For the information C, when the first information includes the input data of the first AI model and the label data of the input data of the first AI model, because the input data may be used as the input of the first AI model, the label data may be used as one of determining bases of the model processing performance of the first AI model. Therefore, for the second communication apparatus, the second communication apparatus may obtain an AI model with good performance based on the two pieces of information.

In addition, for the second communication apparatus, the second communication apparatus may implement mutual information-based mathematical calculation based on the two pieces of information and AI data (for example, the input data of the second AI model or the output data of the second AI model) that is received and sent by the second communication apparatus over the radio link, and determine the first AI model group based on a result of the mathematical calculation, to improve model performance of the AI models included in the first AI model group on the premise that radio link data meets a bandwidth.

For the information D, when the first information includes the local computational power status information of the first communication apparatus, a complexity requirement of model processing of the AI model may be related to a local computational power status of the first communication apparatus. Therefore, for the second communication apparatus, the first AI model group determined by the second communication apparatus based on the local computational power status information may be adapted to the local computational power status of the first communication apparatus, to provide a first AI model that meets the local computational power status, and improve a success rate of model processing performed by the first communication apparatus based on the first AI model.

For the information E, when the first information includes the channel state information, because the channel state information may reflect a channel characteristic of a wireless channel between the first communication apparatus and the second communication apparatus, for the second communication apparatus, the first AI model group determined by the second communication apparatus based on the channel state information is adapted to the channel characteristic, so that transmission data of a radio link meets a channel bandwidth requirement as much as possible, to improve transmission performance of AI data corresponding to the AI model.

It may be understood that, when the first information includes two or more pieces of information in the foregoing information A to information E, based on a technical gain brought by any one of the foregoing descriptions, a further cumulative gain may be obtained by using the two or more pieces of information.

Optionally, the first information may be sent by using one message/signaling, or may be sent by using a plurality of messages/signaling. This is not limited herein.

In a possible implementation, that the first information sent by the first communication apparatus in step S301 is used to determine the first AI model group includes: The first information is used to update a second AI model group to obtain the first AI model group. The second AI model group includes X AI models and a fourth AI model, and X is an integer greater than or equal to 1. An input of any one of the X AI models includes an output of the fourth AI model, or an input of the fourth AI model includes an output of any one of the X AI models. A third AI model in the X AI models is deployed on the first communication apparatus, the third AI model includes one or more of the X AI models, the fourth AI model is deployed on a second communication apparatus, the X AI models are deployed on Y communication apparatuses, the Y communication apparatuses include the first communication apparatus, and Y is less than or equal to X. In other words, for the second communication apparatus, after the second communication apparatus receives the first information, the second communication apparatus may update the second AI model group based on the first information to obtain the first AI model group. In other words, the first information sent by the first communication apparatus may be used to update another AI model, so that the solution can be applied to an AI model update scenario.

Optionally, update may be replaced with another term, such as modification, iteration, optimization, processing, or the like.

Optionally, when the second AI model group is considered as an AI model, the X AI models and the fourth AI model may be understood as a plurality of AI submodels in the AI model.

Optionally, the third AI model and the fourth AI model included in the second AI model group may be a general-purpose model or a dedicated model, to update different types of models.

It should be understood that the general-purpose model may be referred to as a basic model, a large model, or an L0 model. The dedicated model may be referred to as a small model, an L1 model, an L2 model, or the like.

The large model is used as an example. The large model may be a machine learning model having a large quantity of parameters and a complex structure, and can process massive data and complete various complex tasks, such as natural language processing, computer vision, and speech recognition.

Optionally, the large model is usually constructed by using a deep neural network, and has tens of billions or even hundreds of billions of parameters.

Optionally, a design objective of the large model may be to improve an expression capability and prediction performance of a model, to process more complex tasks and data.

Optionally, the large model may learn complex patterns and features by being trained on a massive amount of data, thereby achieving a stronger generalization capability and enabling accurate prediction on unprocessed data.

In contrast, the small model may be a model with a smaller quantity of parameters and a smaller quantity of layers. Usually, compared with the small model, the large model usually has a larger quantity of parameters and a larger quantity of layers, and has a stronger expression capability and higher accuracy. However, the large model also requires more compute resources and time for training and inference, and is applicable to a scenario with a large data amount and sufficient compute resources, for example, cloud computing, high-performance computing, and artificial intelligence.

Optionally, the small model has advantages such as lightweight, high efficiency, and easy deployment, and is applicable to a scenario with a small data amount and limited compute resources, for example, a mobile terminal application, an embedded device, and the internet of things.

In a possible implementation, the first information sent by the first communication apparatus in step S301 is information sent periodically, and/or the second information sent by the second communication apparatus in step S302 is information sent periodically. Specifically, the first information may be one of the determining bases of the AI model, and the second information may be used for deploying the AI model. The first communication apparatus and the second communication apparatus periodically send the first information and/or the second information to each other, so that the AI model can be periodically determined and/or periodically deployed, to implement a plurality of iterative updates of the AI model through a periodic process.

In a possible implementation, the first information sent by the first communication apparatus in step S301 is used to determine the first AI model group, and an AI model in the first AI model group is a dedicated model. Specifically, the first communication apparatus may be a terminal device. Therefore, an AI model deployed on the terminal device may be a dedicated model, and the first information sent by the terminal device may be used to determine the dedicated model. Different terminal devices may have different terminal-side features (for example, different local data, different local computational power, and different channel features). In this manner, a dedicated model is deployed on the terminal device, so that the AI model deployed on the terminal device can adapt to the terminal-side features of the terminal device, thereby improving model processing performance of the AI model.

Based on the technical solution shown in FIG. 3, the second communication apparatus serves as a receiver of the first information. The second communication apparatus may determine the first AI model group based on the first information from the first communication apparatus, and send, to the first communication apparatus, the second information used to determine a first AI model in the first AI model group. Therefore, when a communication apparatus in a communication system serves as an AI participating node, computational power of the communication apparatus can be used for AI model processing, while the first information from the first communication apparatus can also be used as one of determining bases for the second communication apparatus to determine an AI model. In this way, the AI model determined by the second communication apparatus can adapt to the first communication apparatus as much as possible, thereby improving processing performance of subsequent model processing performed by the first communication apparatus based on the AI model.

In a possible implementation of the method shown in FIG. 3, after the first communication apparatus receives the second information in step S302, the method further includes: The first communication apparatus receives fourth information. The fourth information indicates to stop processing on the first AI model. Specifically, the first communication apparatus may further receive the fourth information indicating to stop processing on the first AI model, so that the first communication apparatus stops participating in processing of the first AI model group, thereby releasing resources of the first communication apparatus and reducing transmission overheads of input data and/or output data corresponding to the first AI model.

In addition, when K is greater than 1, a communication apparatus participating in the first AI model group, in addition to the first communication apparatus, may further include other K-1 communication apparatuses. The first communication apparatus may stop processing on the first AI model through an indication of the fourth information, so that pruning processing can be implemented on some AI models (for example, the first AI model), thereby removing a low-efficiency device/low-efficiency link and selecting a better (or optimal) collaboration set.

In a possible implementation, the second communication apparatus may send (determine, generate, or the like) the fourth information in a plurality of manners. The following provides descriptions with reference to some implementation examples.

In an implementation example, the second communication apparatus may obtain a valid information amount ratio of M links between the second communication apparatus and the M communication apparatuses, and send the fourth information to a communication apparatus on a link whose valid information amount ratio is smaller than a threshold. For example, a threshold for a valid information amount ratio of a single link is predefined or pre-configured as Thᵣₐₜᵢₒ, and a valid information amount ratio ratioₖ of a k^{th} link among the M links meets: ${ratio}_{k} = \frac{{β}_{k} I \left({\hat{Z}}_{k}; {X}_{k}\right)}{{\sum }_{k = 1}^{K} {β}_{k} I \left({\hat{Z}}_{k}; {X}_{k}\right)} .$

For definitions of the parameters, refer to the foregoing descriptions.

In the foregoing manner, the second communication apparatus may send the fourth information to a communication apparatus on a link whose valid information amount ratio is smaller than the threshold Thᵣₐₜᵢₒ . An indication of the fourth information may enable some communication apparatuses (for example, the first communication apparatus) to stop processing on the first AI model, so that pruning processing can be implemented on some AI models (for example, the first AI model), thereby removing a low-efficiency device/low-efficiency link and selecting a better (or optimal) collaboration set.

Optionally, in addition to the valid information amount ratio of the M links and the threshold for the valid information amount ratio, the determining bases of the fourth information may further be implemented by using other parameters, for example, a valid information amount of some or all of the M links and a valid information amount threshold, a mutual information amount of some or all of the M links and a mutual information amount threshold, a dimension of input data of some or all of the M links and a dimension threshold of the input data, and a dimension of output data of some or all of the M links and a threshold of an output dimension.

Optionally, any one of the foregoing thresholds may be determined by the second communication apparatus based on a plurality of manners, for example, a local computational power status of the second communication apparatus and a quantity of AI tasks processed by the second communication apparatus. Alternatively, the any threshold is pre-configured.

In a possible implementation, the second communication apparatus may obtain, based on information sent by the M communication apparatuses, some parameters (for example, the valid information amount of the M links, the mutual information amount of the some or all of the M links, the dimension of the input data of the some or all of the M links, and the dimension of the output data of the some or all of the M links) in the determining bases of the fourth information. For example, before the first communication apparatus receives the fourth information, the method further includes: The first communication apparatus sends fifth information to the second communication apparatus. The fifth information is used to determine the fourth information, and the fifth information includes at least one of the following: input data or output data of the first AI model, dimension information of the input data of the first AI model or dimension information of the output data of the first AI model, a dimension expected by the first communication apparatus, a value range of the dimension expected by the first communication apparatus, and channel state information of the first communication apparatus. Specifically, after the first communication apparatus receives, in step S302, the second information used to determine the first AI model, the first communication apparatus may perform model processing based on the determined first AI model. Then, the first communication apparatus may send the fifth information, so that the second communication apparatus determines the fourth information based on the at least one piece of information indicated by the fifth information. Therefore, the fourth information indicating the first communication apparatus to stop model processing may be determined based on the state information that is of the first communication apparatus and that is indicated by the fifth information, so that the second communication apparatus can implement pruning processing based on state information of one or more communication apparatuses in the collaboration set.

In another implementation example, the second communication apparatus may alternatively trigger, in another manner, sending of the fourth information to the first communication apparatus. For example, the method further includes: The first communication apparatus sends sixth information to the second communication apparatus. The sixth information is used to request to stop processing on the first AI model. Specifically, after the first communication apparatus receives, in step S302, the second information used to determine the first AI model, the first communication apparatus may perform model processing based on the determined first AI model. Then, the first communication apparatus may send the sixth information used to request to stop processing on the first AI model, so that the second communication apparatus determines the fourth information based on the sixth information. Therefore, the fourth information indicating the first communication apparatus to stop model processing may be determined based on a request of the first communication apparatus, so that the second communication apparatus can implement pruning processing based on requests of one or more communication apparatuses in the collaboration set.

Optionally, the first communication apparatus may determine (or send) the sixth information based on a plurality of trigger conditions. For example, the trigger condition may include one or more of the following: The first communication apparatus determines that a channel state indicated by the channel state information is lower than or equal to a threshold, the first communication apparatus determines that computational power indicated by computational power status information of the first communication apparatus is lower than or equal to a threshold, and the first communication apparatus determines that a dimension indicated by dimension information of input data or dimension information of output data of the first AI model is lower than a threshold.

FIG. 6 is a diagram of an implementation of a communication method according to this application. The method includes the following steps.

S601: A first communication apparatus performs model processing based on a first AI model, where the first AI model and a second AI model are included in a first AI model group, the first AI model is deployed on the first communication apparatus, the second AI model is deployed on a second communication apparatus, and an input of the first AI model includes an output of the second AI model, or an input of the second AI model includes an output of the first AI model.

S602: The second communication apparatus sends fourth information, and correspondingly, the first communication apparatus receives the fourth information. The fourth information indicates to stop processing on the first AI model.

In a possible implementation, the first AI model group further includes Z AI models, and an input of any one of the Z AI models includes the output of the second AI model, or the input of the second AI model includes an output of any one or more of the Z AI models. Specifically, in addition to the first AI model deployed on the first communication apparatus and the second AI model deployed on the second communication apparatus, the first AI model group may further include the Z AI models deployed on another communication apparatus. In other words, a communication apparatus participating in the first AI model group, in addition to the first communication apparatus, may further include other communication apparatuses. The first communication apparatus may stop processing on the first AI model through an indication of the fourth information, so that pruning processing can be implemented on some AI models (for example, the first AI model), thereby removing a low-efficiency device/low-efficiency link and selecting a better (or optimal) collaboration set.

In a possible implementation, before the first communication apparatus receives the fourth information, the method further includes: The first communication apparatus sends fifth information. The fifth information is used to determine the fourth information, and the fifth information includes at least one of the following: input data or output data of the first AI model, dimension information of the input data of the first AI model or dimension information of the output data of the first AI model, a dimension expected by the first communication apparatus, a value range of the dimension expected by the first communication apparatus, and channel state information of the first communication apparatus. Specifically, the first communication apparatus may send the fifth information, so that the second communication apparatus determines the fourth information based on the at least one piece of information indicated by the fifth information. Therefore, the fourth information indicating the first communication apparatus to stop model processing may be determined based on the state information that is of the first communication apparatus and that is indicated by the fifth information, so that the second communication apparatus can implement pruning processing based on state information of one or more communication apparatuses in the collaboration set.

In a possible implementation, the method further includes: The first communication apparatus sends sixth information. The sixth information is used to request to stop processing on the first AI model. Specifically, the first communication apparatus may send the sixth information used to request to stop processing on the first AI model, so that the second communication apparatus determines the fourth information based on the sixth information. Therefore, the fourth information indicating the first communication apparatus to stop model processing may be determined based on a request of the first communication apparatus, so that the second communication apparatus can implement pruning processing based on requests of one or more communication apparatuses in the collaboration set.

Optionally, the first communication apparatus may determine (or send) the sixth information based on a plurality of trigger conditions. For example, the trigger condition may include one or more of the following: The first communication apparatus determines that a channel state indicated by the channel state information is lower than or equal to a threshold, the first communication apparatus determines that computational power indicated by computational power status information of the first communication apparatus is lower than or equal to a threshold, and the first communication apparatus determines that a dimension indicated by dimension information of input data or dimension information of output data of the first AI model is lower than a threshold.

It should be noted that, in the implementation shown in FIG. 6, for the fourth information/the fifth information/the sixth information, refer to the foregoing descriptions for implementation of corresponding technical effects. Details are not described herein again.

Based on the technical solution shown in FIG. 6, in a process in which the first communication apparatus performs model processing based on the first AI model, the first communication apparatus may receive the fourth information indicating to stop processing on the first AI model, so that the first communication apparatus stops participating in processing of the first AI model group, thereby releasing resources of the first communication apparatus and reducing transmission overheads of input data and/or output data corresponding to the first AI model.

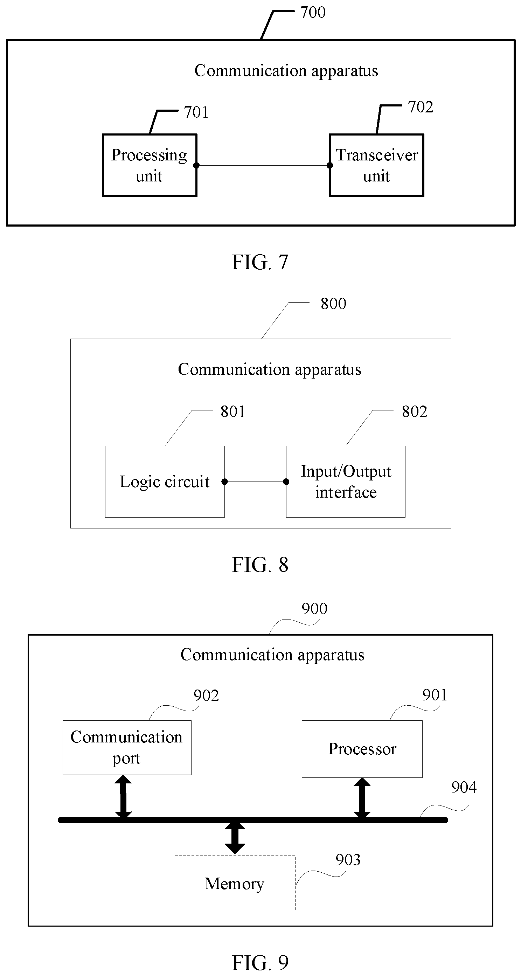

Refer to FIG. 7. An embodiment of this application provides a communication apparatus 700. The communication apparatus 700 can implement a function of the second communication apparatus or the first communication apparatus in the foregoing method embodiments, and therefore can also achieve beneficial effects of the foregoing method embodiments. In an embodiment of this application, the communication apparatus 700 may be the first communication apparatus (or the second communication apparatus), or may be an integrated circuit, an element, or the like inside the first communication apparatus (or the second communication apparatus), for example, a chip.

It should be noted that a transceiver unit 702 may include a sending unit and a receiving unit, which are respectively configured to perform sending and receiving.

In a possible implementation, when the apparatus 700 is configured to perform the method performed by the first communication apparatus in the foregoing embodiment, the apparatus 700 includes a processing unit 701 and a transceiver unit 702. The processing unit 701 is configured to determine first information. The transceiver unit 702 is configured to send the first information. The first information is used to determine a first AI model group, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are configured to be deployed on M communication apparatuses, the M communication apparatuses include the first communication apparatus, and M is less than or equal to K. The transceiver unit 702 is configured to receive second information. The second information is used to determine a first AI model, and the first AI model includes one or more of the K AI models.

In a possible implementation, when the apparatus 700 is configured to perform the method performed by the second communication apparatus in the foregoing embodiment, the apparatus 700 includes a processing unit 701 and a transceiver unit 702. The transceiver unit 702 receives first information. The processing unit 701 is configured to determine a first AI model group based on the first information, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are deployed on M communication apparatuses, the M communication apparatuses include the first communication apparatus, and M is less than or equal to K. The transceiver unit 702 is further configured to send second information. The second information is used to determine a first AI model, the first AI model is deployed on the first communication apparatus, and the first AI model includes one or more of the K AI models.

In a possible implementation, when the apparatus 700 is configured to perform the method performed by the first communication apparatus in the foregoing embodiment, the apparatus 700 includes a processing unit 701 and a transceiver unit 702. The processing unit 701 is configured to perform model processing based on a first AI model, and the first AI model and a second AI model are included in a first AI model group. The first AI model is deployed on the first communication apparatus, and the second AI model is deployed on a second communication apparatus. An input of the first AI model includes an output of the second AI model, or an input of the second AI model includes an output of the first AI model. The transceiver unit 702 is configured to receive fourth information. The fourth information indicates to stop processing on the first AI model.

In a possible implementation, when the apparatus 700 is configured to perform the method performed by the second communication apparatus in the foregoing embodiment, the apparatus 700 includes a processing unit 701 and a transceiver unit 702. The processing unit 701 is configured to determine fourth information. The fourth information indicates to stop processing on a first AI model, and the first AI model and a second AI model are included in a first AI model group. The first AI model is deployed on the first communication apparatus, and the second AI model is deployed on the second communication apparatus. An input of the first AI model includes an output of the second AI model, or an input of the second AI model includes an output of the first AI model. The transceiver unit 702 is configured to send the fourth information.

It should be noted that for content such as an information execution process of the units of the communication apparatus 700, specifically refer to the descriptions in the foregoing method embodiments of this application. Details are not described herein again.

FIG. 8 is another diagram of a structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the logic circuit 801 is configured to determine first information. The input/output interface 802 is configured to send first information. The first information is used to determine a first AI model group, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are configured to be deployed on M communication apparatuses, the M communication apparatuses include the first communication apparatus, and M is less than or equal to K. The input/output interface 802 is further configured to receive second information. The second information is used to determine a first AI model, and the first AI model includes one or more of the K AI models.

Optionally, the input/output interface 802 receives the first information. The logic circuit 801 is configured to determine a first AI model group based on the first information, the first AI model group includes K AI models and a second AI model, and K is an integer greater than or equal to 1. An input of any one of the K AI models includes an output of the second AI model, or an input of the second AI model includes an output of one or more of the K AI models. The second AI model is deployed on a second communication apparatus, the K AI models are deployed on M communication apparatuses, the M communication apparatuses include the first communication apparatus, and M is less than or equal to K. The input/output interface 802 is further configured to send second information. The second information is used to determine a first AI model, the first AI model is deployed on the first communication apparatus, and the first AI model includes one or more of the K AI models.

Optionally, the logic circuit 801 is configured to perform model processing based on a first AI model, and the first AI model and a second AI model are included in a first AI model group. The first AI model is deployed on the first communication apparatus, and the second AI model is deployed on a second communication apparatus. An input of the first AI model includes an output of the second AI model, or an input of the second AI model includes an output of the first AI model. The input/output interface 802 is configured to receive fourth information. The fourth information indicates to stop processing on the first AI model.

Optionally, the logic circuit 801 is configured to determine fourth information. The fourth information indicates to stop processing on a first AI model, and the first AI model and a second AI model are included in a first AI model group. The first AI model is deployed on the first communication apparatus, and the second AI model is deployed on the second communication apparatus. An input of the first AI model includes an output of the second AI model, or an input of the second AI model includes an output of the first AI model. The input/output interface 802 is configured to send the fourth information.

The logic circuit 801 and the input/output interface 802 may further perform other steps performed by the first communication apparatus or the second communication apparatus in any embodiment, and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and some or all of functions of the processing apparatus may be implemented by software. Some or all of functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processors (digital signal processors, DSPs), microcontroller units (microcontroller units, MCUs), programmable logic devices (programmable logic devices, PLDs) or other integrated chips, or any combination of the foregoing chips or processors.

FIG. 9 shows a communication apparatus 900 in the foregoing embodiments according to an embodiment of this application. The communication apparatus 900 may be specifically a communication apparatus serving as a terminal device in the foregoing embodiments. An example shown in FIG. 9 is that the terminal device is implemented as the terminal device (or a component in the terminal device).

In a possible diagram of a logic structure of the communication apparatus 900, the communication apparatus 900 may include but is not limited to at least one processor 901 and a communication port 902.

The transceiver unit 702 shown in FIG. 7 may be a communication interface. The communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

Further optionally, the apparatus may include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that, the communication apparatus 900 shown in FIG. 9 may be specifically configured to implement steps implemented by the terminal device in the foregoing method embodiments, and implement technical effects corresponding to the terminal device. For specific implementations of the communication apparatus shown in FIG. 9, refer to the descriptions in the foregoing method embodiments. Details are not described herein again.

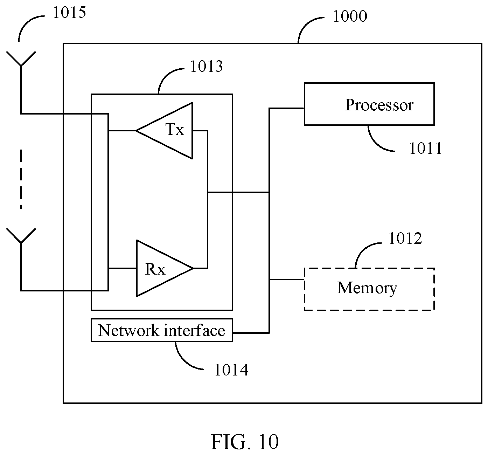

FIG. 10 is a diagram of a structure of a communication apparatus 1000 in the foregoing embodiments according to an embodiment of this application. The communication apparatus 1000 may be specifically a communication apparatus serving as the network device in the foregoing embodiments. In an example shown in FIG. 10, the network device is implemented by using a network device (or a component in the network device). For a structure of the communication apparatus, refer to the structure shown in FIG. 10.

The communication apparatus 1000 includes at least one processor 1011 and at least one network interface 1014. Further optionally, the communication apparatus further includes at least one memory 1012, at least one transceiver 1013, and one or more antennas 1015. The processor 1011, the memory 1012, the transceiver 1013, and the network interface 1014 are connected, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 702 shown in FIG. 7 may be a communication interface. The communication interface may be the network interface 1014 in FIG. 10, and the network interface 1014 may include an input interface and an output interface. Alternatively, the network interface 1014 may be a transceiver circuit, and the transceiver circuit may include an input interface circuit and an output interface circuit.

The processor 1011 is mainly configured to: process a communication protocol and communication data; control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1011 in FIG. 10. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the memory in a form of a software program, and the processor executes the software program, to implement a baseband processing function.

The memory is mainly configured to store the software program and data. The memory 1012 may exist independently, and is connected to the processor 1011. Optionally, the memory 1012 and the processor 1011 may be integrated together, for example, integrated in a chip. The memory 1012 can store program code for executing the technical solutions of embodiments of this application, and execution of the program code is controlled by the processor 1011. Various types of executed computer program code may also be considered as driver programs of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive radio frequency signals. The receiver Rx of the transceiver 1013 is configured to: receive the radio frequency signal from the antenna, convert the radio frequency signal into a digital baseband signal or a digital intermediate frequency signal, and provide the digital baseband signal or the digital intermediate frequency signal to the processor 1011, so that the processor 1011 performs further processing, for example, demodulation processing and decoding processing, on the digital baseband signal or the digital intermediate frequency signal. In addition, the transmitter Tx of the transceiver 1013 is further configured to: receive a modulated digital baseband signal or a modulated digital intermediate frequency signal from the processor 1011, convert the modulated digital baseband signal or the modulated digital intermediate frequency signal into a radio frequency signal, and send the radio frequency signal through the one or more antennas 1015. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 1013 may also be referred to as a transceiver unit, a transceiver machine, a transceiver apparatus, or the like. Optionally, a device that is in the transceiver unit and that is configured to implement a receiving function may be considered as a receiving unit, and a device that is in the transceiver unit and that is configured to implement a sending function may be considered as a sending unit. In other words, the transceiver unit includes the receiving unit and the sending unit. The receiving unit may also be referred to as a receiver machine, an input port, a receiving circuit, or the like. The sending unit may be referred to as a transmitter machine, a transmitter, a transmitter circuit, or the like.

It should be noted that the communication apparatus 1000 shown in FIG. 10 may be specifically configured to implement steps implemented by the network device in the foregoing method embodiments, and implement technical effects corresponding to the network device. For specific implementations of the communication apparatus 1000 shown in FIG. 10, refer to the descriptions in the foregoing method embodiments. Details are not described herein again.

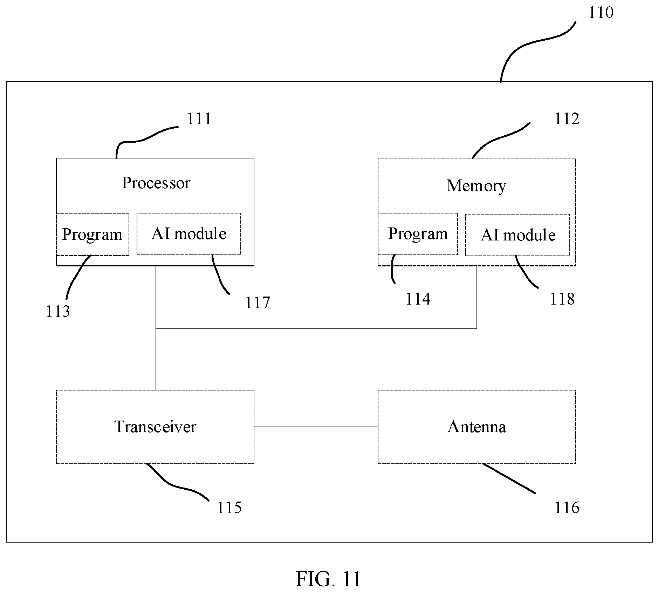

FIG. 11 is a diagram of a structure of a communication apparatus in the foregoing embodiments according to an embodiment of this application.

It may be understood that the communication apparatus 110 includes, for example, modules, units, elements, circuits, or interfaces, which are properly configured together to perform the technical solutions provided in this application. The communication apparatus 110 may be the terminal device or the network device described above, or may be a component (for example, a chip) in these devices, to implement the method described in the following method embodiments. The communication apparatus 110 includes one or more processors 111. The processor 111 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, in a design, the processor 111 may include a program 113 (which may also be referred to as code or instructions sometimes). The program 113 may be run on the processor 111, to enable the communication apparatus 110 to perform the methods described in the following embodiments. In another possible design, the communication apparatus 110 includes a circuit (not shown in FIG. 11).

Optionally, the communication apparatus 110 may include one or more memories 112 storing a program 114 (which may also be referred to as code or instructions sometimes). The program 114 may be run on the processor 111, to enable the communication apparatus 110 to perform the methods described in the foregoing method embodiments.

Optionally, the processor 111 and/or the memory 112 may include AI modules 117 and 118, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC.

Optionally, the processor 111 and/or the memory 112 may further store data. The processor and the memory may be separately disposed, or may be integrated together.

Optionally, the communication apparatus 110 may further include a transceiver 115 and/or an antenna 116. The processor 111 may also be referred to as a processing unit sometimes, and controls the communication apparatus (for example, a RAN node or a terminal). The transceiver 115 sometimes may also be referred to as a transceiver unit, a transceiver machine, a transceiver circuit, a transceiver, or the like, and is configured to implement a transceiver function of the communication apparatus through the antenna 116.

The processing unit 701 shown in FIG. 7 may be a processor 111. The transceiver unit 702 shown in FIG. 7 may be a communication interface. The communication interface may be the transceiver 115 in FIG. 11. The transceiver 115 may include an input interface and an output interface. Alternatively, the transceiver 115 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method according to the possible implementations of the first communication apparatus or the second communication apparatus in the foregoing embodiments.

An embodiment of this application further provides a computer program product (also referred to as a computer program) including a program or instructions. When the computer program product is executed by the processor, the processor performs the method in the possible implementations of the first communication apparatus or the second communication apparatus.

An embodiment of this application further provides a chip system. The chip system includes at least one processor, configured to support a communication apparatus in implementing a function in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first communication apparatus or the second communication apparatus in the foregoing method embodiments.

An embodiment of this application further provides a communication system. The network system architecture includes the first communication apparatus and the second communication apparatus in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, wherein the method is applied to a first communication apparatus, and the method comprises:
sending first information, wherein the first information is used to determine a first artificial intelligence AI model group, the first AI model group comprises K AI models and a second AI model, and K is an integer greater than or equal to 1, wherein an input of any one of the K AI models comprises an output of the second AI model, or an input of the second AI model comprises an output of one or more of the K AI models, the second AI model is deployed on a second communication apparatus, the K AI models are configured to be deployed on M communication apparatuses, the M communication apparatuses comprise the first communication apparatus, and M is less than or equal to K; and
receiving second information, wherein the second information is used to determine a first AI model, and the first AI model comprises one or more of the K AI models.

2. The method according to claim 1, wherein before receiving the second information, the method further comprises:
receiving third information, wherein the third information is used to configure a mapping relationship between P pieces of dimension information and Q indexes, both P and Q are positive integers, the second information comprises one or more indexes of the Q indexes, and the one or more indexes are used to determine one piece of dimension information in the P pieces of dimension information.

3. The method according to claim 2, wherein the third information is layer-3 signaling, and the second information is layer-1 signaling and/or layer-2 signaling.

4. The method according to any one of claims 1 to 3, wherein the second information comprises at least one of the following:
a model parameter of the first AI model, a model parameter of the first AI model group, dimension information of input data of the first AI model, and dimension information of output data of the first AI model.

5. The method according to any one of claims 1 to 4, wherein the first information comprises first dimension information or second dimension information;
when the input of the first AI model comprises the output of the second AI model, the first dimension information is used to determine the dimension information of the input data of the first AI model or dimension information of output data of the second AI model; and
when the input of the second AI model comprises the output of the first AI model, the second dimension information is used to determine the dimension information of the output data of the first AI model or dimension information of input data of the second AI model.

6. The method according to claim 5, wherein the dimension information comprises at least one of the following:
an upper limit of a dimension, a lower limit of a dimension, a dimension expected by the first communication apparatus, and a value range of the dimension expected by the first communication apparatus.

7. The method according to claim 5 or 6, wherein the first dimension information or the second dimension information is determined based on channel state information.

8. The method according to any one of claims 1 to 7, wherein the first information comprises at least one of the following:
the input data of the first AI model, label data of the input data of the first AI model, local computational power status information of the first communication apparatus, and the channel state information.

9. The method according to any one of claims 1 to 8, wherein that the first information is used to determine the first AI model group comprises:
the first information is used to update a second AI model group to obtain the first AI model group, wherein the second AI model group comprises X AI models and a fourth AI model, and X is an integer greater than or equal to 1, wherein an input of any one of the X AI models comprises an output of the fourth AI model, or an input of the fourth AI model comprises an output of any one of the X AI models, a third AI model in the X AI models is deployed on the first communication apparatus, the third AI model comprises one or more of the X AI models, the fourth AI model is deployed on a second communication apparatus, the X AI models are deployed on Y communication apparatuses, the Y communication apparatuses comprise the first communication apparatus, and Y is less than or equal to X.

10. The method according to any one of claims 1 to 9, wherein after receiving the second information, the method further comprises:
receiving fourth information, wherein the fourth information indicates to stop processing on the first AI model.

11. The method according to claim 10, wherein before receiving the fourth information, the method further comprises:
sending fifth information, wherein the fifth information is used to determine the fourth information, and the fifth information comprises at least one of the following:
the input data or the output data of the first AI model, the dimension information of the input data of the first AI model or the dimension information of the output data of the first AI model, the dimension expected by the first communication apparatus, the value range of the dimension expected by the first communication apparatus, and the channel state information of the first communication apparatus.

12. The method according to claim 10 or 11, wherein the method further comprises:
sending sixth information, wherein the sixth information is used to request to stop processing on the first AI model.

13. A communication method, comprising:
receiving first information;
determining a first artificial intelligence AI model group based on the first information, wherein the first AI model group comprises K AI models and a second AI model, and K is an integer greater than or equal to 1, wherein an input of any one of the K AI models comprises an output of the second AI model, or an input of the second AI model comprises an output of one or more of the K AI models, the second AI model is deployed on a second communication apparatus, the K AI models are deployed on M communication apparatuses, the M communication apparatuses comprise the first communication apparatus, and M is less than or equal to K; and
sending second information, wherein the second information is used to determine a first AI model, the first AI model is deployed on the first communication apparatus, and the first AI model comprises one or more of the K AI models.

14. The method according to claim 13, wherein before sending the second information, the method further comprises:
sending third information, wherein the third information is used to configure a mapping relationship between P pieces of dimension information and Q indexes, both P and Q are positive integers, the second information comprises one or more indexes of the Q indexes, and the one or more indexes are used to determine one piece of dimension information in the P pieces of dimension information.

15. The method according to claim 14, wherein the third information is layer-3 signaling, and the second information is layer-1 signaling and/or layer-2 signaling.

16. The method according to any one of claims 13 to 15, wherein the second information comprises at least one of the following:
a model parameter of the first AI model, a model parameter of the first AI model group, dimension information of input data of the first AI model, and dimension information of output data of the first AI model.

17. The method according to any one of claims 13 to 16, wherein the first information comprises first dimension information or second dimension information;
when the input of the first AI model comprises the output of the second AI model, the first dimension information is used to determine the dimension information of the input data of the first AI model or dimension information of output data of the second AI model; and
when the input of the second AI model comprises the output of the first AI model, the second dimension information is used to determine the dimension information of the output data of the first AI model or dimension information of input data of the second AI model.

18. The method according to claim 17, wherein the dimension information comprises at least one of the following:
an upper limit of a dimension, a lower limit of a dimension, a dimension expected by the first communication apparatus, and a value range of the dimension expected by the first communication apparatus.

19. The method according to claim 17 or 18, wherein the first dimension information or the second dimension information is determined based on channel state information.

20. The method according to any one of claims 13 to 19, wherein the first information comprises at least one of the following:
the input data of the first AI model, label data of the input data of the first AI model, local computational power status information of the first communication apparatus, and the channel state information.

21. The method according to any one of claims 13 to 20, wherein that the first information is used to determine the first AI model group comprises:
the first information is used to update a second AI model group to obtain the first AI model group, wherein the second AI model group comprises X AI models and a fourth AI model, and X is an integer greater than or equal to 1, wherein an input of any one of the X AI models comprises an output of the fourth AI model, or an input of the fourth AI model comprises an output of any one of the X AI models, a third AI model in the X AI models is deployed on the first communication apparatus, the third AI model comprises one or more of the X AI models, the fourth AI model is deployed on a second communication apparatus, the X AI models are deployed on Y communication apparatuses, the Y communication apparatuses comprise the first communication apparatus, and Y is less than or equal to X.

22. The method according to any one of claims 13 to 21, wherein after sending the second information, the method further comprises:
sending fourth information, wherein the fourth information indicates to stop processing on the first AI model.

23. The method according to claim 22, wherein before sending the fourth information, the method further comprises:
receiving fifth information, wherein the fifth information is used to determine the fourth information, and the fifth information comprises at least one of the following:
the input data or the output data of the first AI model, the dimension information of the input data of the first AI model or the dimension information of the output data of the first AI model, the dimension expected by the first communication apparatus, the value range of the dimension expected by the first communication apparatus, and the channel state information of the first communication apparatus.

24. The method according to claim 22 or 23, wherein the method further comprises:
receiving sixth information, wherein the sixth information is used to request to stop processing on the first AI model.

25. A communication method, wherein the method is applied to a first communication apparatus and comprises:
performing model processing based on a first AI model, wherein the first AI model and a second AI model are comprised in a first AI model group, the first AI model is deployed on the first communication apparatus, the second AI model is deployed on a second communication apparatus, and an input of the first AI model comprises an output of the second AI model, or an input of the second AI model comprises an output of the first AI model; and
receiving fourth information, wherein the fourth information indicates to stop processing on the first AI model.

26. The method according to claim 25, wherein the first AI model group comprises Z AI models, Z is a positive integer, and an input of any one of the Z AI models comprises the output of the second AI model, or the input of the second AI model comprises an output of any one or more of the Z AI models.

27. The method according to claim 25 or 26, wherein before receiving the fourth information, the method further comprises:
sending fifth information, wherein the fifth information is used to determine the fourth information, and the fifth information comprises at least one of the following: input data or output data of the first AI model, dimension information of the input data of the first AI model or dimension information of the output data of the first AI model, a dimension expected by the first communication apparatus, a value range of the dimension expected by the first communication apparatus, and channel state information of the first communication apparatus.

28. The method according to any one of claims 25 to 27, wherein the method further comprises:
sending sixth information, wherein the sixth information is used to request to stop processing on the first AI model.

29. A communication method, wherein the method is applied to a second communication apparatus, and the method comprises:
determining fourth information, wherein the fourth information indicates to stop processing on a first AI model, the first AI model and a second AI model are comprised in a first AI model group, the first AI model is deployed on a first communication apparatus, the second AI model is deployed on the second communication apparatus, and an input of the first AI model comprises an output of the second AI model, or an input of the second AI model comprises an output of the first AI model; and
sending the fourth information.

30. The method according to claim 29, wherein the first AI model group comprises Z AI models, and an input of any one of the Z AI models comprises the output of the second AI model, or the input of the second AI model comprises an output of any one or more of the Z AI models.

31. The method according to claim 29 or 30, wherein before sending the fourth information, the method further comprises:
receiving fifth information, wherein the fifth information is used to determine the fourth information, and the fifth information comprises at least one of the following: input data or output data of the first AI model, dimension information of the input data of the first AI model or dimension information of the output data of the first AI model, a dimension expected by the first communication apparatus, a value range of the dimension expected by the first communication apparatus, and channel state information of the first communication apparatus.

32. The method according to any one of claims 29 to 31, wherein the method further comprises:
receiving sixth information, wherein the sixth information is used to request to stop processing on the first AI model.

33. A first communication apparatus, comprising a module configured to perform the method according to any one of claims 1 to 12 or claims 25 to 28.

34. A second communication apparatus, comprising a module configured to perform the method according to any one of claims 13 to 24 or claims 29 to 32.

35. A first communication apparatus, comprising at least one processor, wherein the at least one processor is coupled to a memory, and the at least one processor is configured to execute a program or instructions stored in the memory, to enable the communication apparatus to perform the method according to any one of claims 1 to 12 or claims 25 to 28.

36. The first communication apparatus according to claim 35, wherein the first communication apparatus is a chip or a chip system.

37. A second communication apparatus, comprising at least one processor, wherein the at least one processor is coupled to a memory, and the at least one processor is configured to execute a program or instructions stored in the memory, to enable the second communication apparatus to perform the method according to any one of claims 13 to 24 or claims 29 to 32.

38. The second communication apparatus according to claim 37, wherein the second communication apparatus is a chip or a chip system.

39. A first communication apparatus, comprising at least one logic circuit and an input/output interface, wherein the logic circuit is configured to perform the method according to any one of claims 1 to 12 or claims 25 to 28.

40. A second communication apparatus, comprising at least one logic circuit and an input/output interface, wherein the logic circuit is configured to perform the method according to any one of claims 13 to 24 or claims 29 to 32.

41. A communication system, comprising the first communication apparatus according to any one of claim 33, 35, or 39 and the second communication apparatus according to any one of claim 34, 37, or 40.

42. A chip system, wherein the chip system comprises at least one processor, configured to support a first communication apparatus in implementing the method according to any one of claims 1 to 12 or claims 25 to 28, or configured to support a second communication apparatus in implementing the method according to any one of claims 13 to 24 or claims 29 to 32.

43. The chip system according to claim 42, wherein the chip system further comprises a memory, and the memory is configured to store program instructions and data of the first communication apparatus; or the memory is configured to store program instructions and data of the second communication apparatus.

44. The chip system according to claim 42 or 43, wherein the chip system comprises a chip, or the chip system comprises a chip and another discrete device.

45. The chip system according to any one of claims 42 to 44, wherein the chip system further comprises an interface circuit, and the interface circuit provides program instructions and/or data for the at least one processor.

46. A readable storage medium, wherein the storage medium stores a computer program or instructions, and when the computer program or the instructions are executed by a communication apparatus, the method according to any one of claims 1 to 12 or claims 25 to 28 is implemented, or the method according to any one of claims 13 to 24 or claims 29 to 32 is implemented.

47. A computer program product, comprising computer instructions, wherein when the instructions are run on a processor, the method according to any one of claims 1 to 12 or 25 to 28 is performed, or the method according to any one of claims 13 to 24 or 29 to 32 is performed.
